(19) Europäisches Patentamt
European Patent Office
Office européen des brevets

(11) **EP 3 268 297 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **16715990.4**

(22) Anmeldetag: **03.03.2016**

(51) Internationale Patentklassifikation (IPC):
*H02K 7/102* (2006.01)    *H02K 21/22* (2006.01)
*B65G 23/08* (2006.01)    *B65G 13/06* (2006.01)

(52) Gemeinsame Patentklassifikation (CPC):
**B65G 13/06; B65G 23/08; H02K 7/1025; H02K 21/22**

(86) Internationale Anmeldenummer:
**PCT/AT2016/050049**

(87) Internationale Veröffentlichungsnummer:
**WO 2016/141396 (15.09.2016 Gazette 2016/37)**

(54) **FÖRDEREINRICHTUNG MIT VERBESSERTER VERDRAHTUNG VON ANTRIEBSMOTOR UND BREMSE EINER FÖRDERROLLE SOWIE BETRIEBSVERFAHREN DAFÜR**

CONVEYING DEVICE WITH IMPROVED WIRING OF DRIVE MOTOR AND BRAKE OF A CONVEYING ROLLER AND OPERATING METHOD THEREFOR

DISPOSITIF DE TRANSPORT AVEC CÂBLAGE AMÉLIORÉ DU MOTEUR D'ENTRAÎNEMENT ET DU FREIN D'UN ROULEAU DE TRANSPORT AINSI QUE PROCÉDÉ DE FONCTIONNEMENT À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2015 AT 502002015**

(43) Veröffentlichungstag der Anmeldung:
**17.01.2018 Patentblatt 2018/03**

(73) Patentinhaber: **TGW Mechanics GmbH**
**4600 Wels (AT)**

(72) Erfinder:
• **HOFER, Stefan**
**4710 Pollham (AT)**
• **WEISSENBÖCK, Franz**
**4652 Steinerkirchen an der Traun (AT)**
• **WOLKERSTORFER, Christoph**
**4600 Wels (AT)**

(74) Vertreter: **Burger, Hannes et al**
**Anwälte Burger & Partner**
**Rechtsanwalt GmbH**
**Rosenauerweg 16**
**4580 Windischgarsten (AT)**

(56) Entgegenhaltungen:
**EP-A1- 1 172 312      EP-A2- 1 848 094**
**WO-A1-2011/029120     JP-A- 2003 051 362**
**US-A1- 2004 195 078   US-A1- 2009 166 157**
**US-B2- 7 021 456**

**Beschreibung**

Die Erfindung betrifft eine Fördereinrichtung nach Anspruch 1 umfassend ein erstes Rahmenprofil und ein davon beabstandet verlaufendes, zweites Rahmenprofil, sowie zumindest eine zwischen den Rahmenprofilen angeordnete Förderrolle mit einem in der Förderrolle angeordneten Antriebsmotor und einer in der Förderrolle angeordneten Bremse sowie mit einer dem Antriebsmotor zugeordneten ersten elektronischen Steuerung und einer der Bremse zugeordneten zweiten elektronischen Steuerung. Weiterhin betrifft die Erfindung ein Betriebsverfahren nach Anspruch 17 für eine Förderrolle mit einem in der Förderrolle angeordneten Antriebsmotor und einer in der Förderrolle angeordneten Bremse, bei dem von einer übergeordneten Steuerung, beispielsweise einem Leitrechner, ein Befehl zum Anfahren der Förderrolle empfangen wird.

Eine Fördereinrichtung der genannten Art ist grundsätzlich bekannt. Beispielsweise offenbaren die EP 1 848 094 A2 und die US 7,021,456 B2 Fördereinrichtungen mit Förderrollen mit einer integrierten Bremse. Nachteilig ist im Stand der Technik insbesondere die vergleichsweise aufwändige Verkabelung der Förderrolle beziehungsweise der Fördereinrichtung. Weiterhin offenbart die EP 1 848 094 A2 eine Rolle mit optionaler Bremseinrichtung. Dabei wird für die Herstellung eines hochpoligen Motors, der in eine Rolle integrierbar ist, eine Kunststoffträgereinrichtung für Einzelmagnete verwendet, die nach Einbau in ein Rückschlussrohr herausgedreht werden kann. Darüber hinaus wird die Rolle mit integriertem Rollenmotor durch eine externe oder interne Kühleinrichtung gekühlt. Die Rolle kann auch eine in der Rolle integrierte Bremseinrichtung aufweisen. Um das Kontaktieren des Stators bei dessen Herstellung der Rolle zu vereinfachen, kann auch eine teilbare Achse mit entsprechenden Kontaktträgern auf beiden Achsteilen bereitgestellt werden. Insbesondere offenbart EP 1 848 094 A2 eine Fördereinrichtung und ein entsprechendes Betriebsverfahren nach den Oberbegriffen der Ansprüche 1 bzw. 17.

Die US 7,021,456 B2 offenbart zudem eine Förderrolle mit einer Bremse. Die Bremse kann selbsthaltend sein, um eine Drehung der Förderrolle zu verhindern, wenn der Aktuator der Bremse deaktiviert ist. Wird der Aktuator der Bremse aktiviert, so wird die Bremse geöffnet und ermöglicht eine Drehung der Förderrolle. Der Aktuator der Bremse kann aktiviert werden, wenn ein Antriebsmotor der Förderrolle aktiviert wird, um diese anzutreiben, und kann deaktiviert werden, wenn der Antriebsmotor abgeschaltet wird.

Die EP 1 172 312 A1 offenbart schließlich ein Steuerverfahren für eine Antriebsrolle eines Förderbands, die von einem eingebauten, bürstenlosen Motor angetrieben und durch eine elektromagnetische Bremse angehalten wird. Wenn der Motor mit Strom versorgt wird, wird die elektromagnetische Bremse ebenfalls mit elektrischer Energie versorgt, um diese zu öffnen beziehungsweise zu lösen. Wenn ein bestimmter Wert der Motordrehzahl erreicht ist, wird der Strom, welcher der Bremse zugeführt wird, getaktet. Die an die Bremse angelegte elektrische Spannung kann daher niedrig gehalten werden, wodurch die Wärmeerzeugung verringert wird. Trotzdem bleibt die Bremse im offenen Zustand.

Eine Aufgabe ist es nun, eine verbesserte Fördereinrichtung anzugeben. Insbesondere soll der Aufwand für die Verkabelung der Förderrolle beziehungsweise der Fördereinrichtung verringert werden. Darüber hinaus ist es auch eine Aufgabe der Erfindung, ein verbessertes Betriebsverfahren für eine Förderrolle mit einem Antriebsmotor und einer Bremse anzugeben.

Die Aufgabe der Erfindung wird mit einer Fördereinrichtung der eingangs genannten Art gelöst, bei der die erste elektronische Steuerung oder die zweite elektronische Steuerung oder eine der zweiten elektronischen Steuerung übergeordnete Steuerung dazu ausgebildet ist, die Bremse aufgrund eines Befehls zum Anfahren der Förderrolle nach dem Anlegen einer elektrischen Spannung an den Antriebsmotor erst zeitverzögert vollständig zu lösen beziehungsweise zu lüften.

Weiterhin wird die Aufgabe der Erfindung durch ein Betriebsverfahren der eingangs genannten Art gelöst, bei dem aufgrund des Befehls zum Anfahren der Förderrolle eine elektrische Spannung an den Antriebsmotor angelegt und die Bremse erst zeitverzögert vollständig gelöst beziehungsweise gelüftet wird.

Durch die vorgeschlagenen Maßnahmen wird eine unerwünschte Rückwärtsdrehung der Förderrolle und damit verbunden eine unerwünschte Rückwärtsbewegung eines geförderten Stückguts beziehungsweise Objekts beim Anfahren der Förderrolle vermieden. Dabei wird besonders darauf hingewiesen, dass sich die genannte Zeitverzögerung auf das vollständige Lösen oder Lüften der Bremse bezieht und das Lösen der Bremse auch schon beim Anlegen der Spannung an den Antriebsmotor oder sogar schon davor eingeleitet werden kann. Durch die vorgeschlagenen Maßnahmen kann das Rücklaufen oder Vorlaufen eines Stückguts, wie zum Beispiel eines Behälters, auf ansteigenden oder abfallenden Abschnitten der Förderstrecke vermieden werden.

Günstig ist es, wenn

- die Bremse näher am zweiten Rahmenprofil liegt als am ersten Rahmenprofil und
- ein längs des zweiten Rahmenprofils verlaufender, zweiter Energieversorgungsbus vorgesehen ist, welcher elektrisch mit der Bremse verbunden oder gekoppelt ist.

Insbesondere ist der Antriebsmotor von der Bremse innerhalb der Förderrolle elektrisch getrennt. Das heißt, innerhalb der Förderrolle gibt es keine elektrische Verbindung zwischen dem Antriebsmotor und der Bremse, und insbesondere gibt es in der Förderrolle keinen zwischen Antriebsmotor und Bremse verlaufenden Energieversorgungsbus. In diesem Zusammenhang ist es auch von Vorteil, wenn eine Verkabelung für den Antriebsmotor und gegebenenfalls für eine dem Antriebsmotor zugeordnete, erste elektronische Steuerung ausschließlich auf der dem ersten Rahmenprofil näher liegenden Seite der Förderrolle und eine Verkabelung für die Bremse und gegebenenfalls für eine der Bremse zugeordnete, zweite elektronische Steuerung ausschließlich auf der dem zweiten Rahmenprofil näher liegenden Seite der Förderrolle aus der Förderrolle herausgeführt ist.

Durch die vorgeschlagenen Maßnahmen gestaltet sich der Aufbau einer Fördereinrichtung und insbesondere einer Förderrolle besonders einfach. Einerseits muss kein Verbindungskabel zwischen Motor und Bremse durch die Förderrolle durch gefädelt werden, andererseits ist die Verkabelung zum Antriebsmotor und die Verkabelung zur Bremse unabhängig von der Länge der Förderrolle. Im Speziellen können der Antriebsmotor und die Bremse als voneinander unabhängige Baugruppen ausgeführt werden, die jeweils in ein den Rollenkörper bildendes Rohr eingeschoben werden. Unabhängig von der Länge der Förderrolle und damit unabhängig von der Nennbreite der Fördereinrichtung können somit stets gleichartig aufgebaute Antriebsmotoren und/oder gleichartig aufgebaute Bremsen eingesetzt werden. Dadurch ist auch ein modularer Aufbau der Förderrolle möglich, da auf einfache Weise Förderrollen nur mit Motor, nur mit Bremse oder mit Antriebsmotor und Bremse hergestellt werden können. Ein weiterer Vorteil besteht darin, dass insgesamt Leitungen eingespart werden können, wenn (grob gesprochen) der Abstand zwischen den Rollen kleiner ist als ihre Länge. Dies ist insbesondere bei leistungsstarken Fördereinrichtungen der Fall. Die für den zweiten Energieversorgungsbus nötigen Leitungen sind dabei weniger lang, als es eine Verkabelung innerhalb der Förderrolle wäre.

Vorteilhaft ist es auch, wenn die erste elektronische Steuerung von der zweiten elektronischen Steuerung innerhalb der Förderrolle elektrisch getrennt ist. Innerhalb der Förderrolle gibt es demzufolge keine elektrische Verbindung zwischen der ersten und der zweiten elektronischen Steuerung. Auch auf diese Weise kann der Aufwand für eine Verkabelung der Förderrolle verringert und deren modularer Aufbau begünstigt werden.

Günstig ist es in obigem Zusammenhang, wenn die erste elektronische Steuerung (unmittelbar oder mittelbar) auf dem ersten Rahmenprofil angeordnet ist und/oder die zweite elektronische Steuerung (unmittelbar oder mittelbar) auf dem zweiten Rahmenprofil angeordnet ist. Dadurch vereinfacht sich der Aufbau der Förderrolle weiter. Zudem kann die Fördereinrichtung aufgrund der außerhalb der Förderrolle angeordneten Steuerungen auch leicht gewartet werden.

Günstig ist es in obigem Zusammenhang aber auch, wenn die erste elektronische Steuerung im Inneren der Förderrolle angeordnet ist, wobei die erste elektronische Steuerung dem ersten Rahmenprofil näher liegt als dem zweiten Rahmenprofil, und/oder die zweite elektronische Steuerung im Inneren der Förderrolle angeordnet, wobei die zweite elektronische Steuerung dem zweiten Rahmenprofil näher liegt als dem ersten Rahmenprofil. Aufgrund der hohen Integration kann die Montage einer Fördereinrichtung durch diese Maßnahmen vereinfacht werden.

Generell ist es auch von Vorteil, wenn die Bremse als elektromagnetisch betätigte, selbsthaltende Reibbremse ausgebildet ist. Dadurch wird die Förderrolle bei einem Ausfall der Versorgungsspannung für die Bremse automatisch gebremst. Im Speziellen kann die Bremse als Feststellbremse (also zum Halten bereits stehender Förderrollen) und/oder als Betriebsbremse (also zum Bremsen bewegter Förderrollen) eingesetzt werden. Insbesondere wenn die Bremse als Feststellbremse eingesetzt wird, können auch formschlüssige Systeme wie zum Beispiel eine Zahnbremse oder Klauenbremse vorgesehen sein. Denkbar ist auch, dass die Bremse zum überwiegenden Teil als Feststellbremse und nur in Ausnahmefällen als Betriebsbremse eingesetzt wird. Beispielsweise kann das Bremsen bewegter Förderrollen im gewöhnlichen Betrieb über den Antriebsmotor erfolgen. In Ausnahmefällen, zum Beispiel wenn ein Bremsen über den Antriebsmotor wegen eines Ausfalls der Versorgungsspannung für denselben nicht möglich ist, wird die Bremse als Betriebsbremse eingesetzt.

Von Vorteil ist es auch, wenn das Bremsmoment der Bremse größer ist als das Antriebsmoment des Antriebsmotors. Auf diese Weise kann die Förderrolle selbst dann gebremst und angehalten werden, wenn der Antriebsmotor aufgrund eines Steuerungsdefekts die Förderrolle in unerwünschter Weise antreibt.

Besonders vorteilhaft ist es auch, wenn der erste und der zweite Energieversorgungsbus jeweils zumindest drei voneinander isolierte Leiter aufweisen, wobei ein erster Leiter mit einem Energieversorgungseingang des Antriebsmotors beziehungsweise der Bremse verbunden ist, ein zweiter Leiter mit einem Energieversorgungseingang der ersten elektronischen Steuerung beziehungsweise der zweiten elektronische Steuerung verbunden ist und zumindest ein dritter Leiter mit einem Masseanschluss der genannten Baugruppen verbunden ist.

Günstig ist auch ein Betriebsverfahren für eine Förderrolle mit einem Antriebsmotor und einer Bremse, bei welchem der Antriebsmotor und die Bremse mit einer ersten Spannung und eine dem Antriebsmotor zugeordnete erste elektronische Steuerung und/oder einer der Bremse zugeordnete zweite elektronische Steuerung mit einer zweiten, niedrigeren Spannung betrieben werden. Aufgrund der höheren ersten Spannung können die relativ starken Antriebsmotoren und Bremsen mit relativ geringen Leitungsverlusten mit elektrischer Energie versorgt werden, wohingegen die elektronischen Steuerungen mit einer für diese besser geeigneten niedrigen zweiten Spannung versorgt werden. Zudem wirken sich Störungen, welche insbesondere von den Antriebsmotoren in die Versorgungsleitungen eingestreut werden nicht oder nur in geringem Maße auf die zweite Versorgungsspannung für die elektronischen Steuerungen aus. Für die erste Spannung kann beispielsweise ein Wert von 48V und für die zweite Spannung beispielsweise ein Wert von 24V vorgesehen sein.

Besonders vorteilhaft ist es auch, wenn in einem zur Bremse führenden Stromkreis ein (elektronisches) Schaltelement vorgesehen ist und die zweite elektronische Steuerung dazu ausgebildet ist, den Schalter zu öffnen, wenn ein Abfall einer Spannung an einem Energieversorgungseingang der Bremse unter einen ersten vorgebbaren Schwellwert festgestellt wird und/oder wenn ein Abfall einer Spannung an einem Energieversorgungseingang der zweiten elektronischen Steuerung unter einen vorgegebenen oder vorgebbaren zweiten Schwellwert festgestellt wird oder vorliegt. Demzufolge ist es für ein Betriebsverfahren für die Fördereinrichtung von Vorteil, wenn ein die erste Spannung führender Stromkreis, welcher die Bremse beinhaltet, getrennt wird, wenn ein Abfall der ersten Spannung unter einen ersten vorgebbaren Schwellwert festgestellt wird und/oder wenn ein Abfall der zweiten Spannung unter einen zweiten vorgebbaren/vorgegebenen Schwellwert festgestellt wird oder vorliegt. Reicht die erste oder zweite Spannung für einen sicheren Betrieb der Bremse beziehungsweise der dieser zugeordneten elektronischen Steuerung nicht mehr aus, so wird die Förderrolle bei Einsatz einer selbsthaltenden Bremse automatisch gebremst. Der Betrieb der Fördereinrichtung ist somit besonders sicher. Selbstverständlich kann auch vorgesehen sein, dass die Bremse aktiviert wird, wenn die erste oder zweite Spannung für einen sicheren Betrieb des Antriebsmotors beziehungsweise der diesem zugeordneten elektronischen Steuerung nicht mehr ausreicht. Das Schaltelement kann beispielsweise als elektronisches Schaltelement (z.B. Transistor, insbesondere FET) oder als elektromechanisches Schaltelement (z.B. Relais) ausgebildet sein.

Insbesondere ist es von Vorteil, wenn das vom Antriebsmotor abgegebene Drehmoment sukzessive erhöht und das von der Bremse aufgebrachte Bremsmoment sukzessive gesenkt wird, wobei die beiden Vorgänge insbesondere im Wesentlichen zum selben Zeitpunkt beginnen können. Durch diese Maßnahmen kann die Förderrolle besonders sanft angefahren werden. Ein Steuersignal für den Antriebsmotor beziehungsweise die Bremse kann dabei stetig sein oder auch mit veränderlichem Tastverhältnis pulsierend sein (Pulsweitenmodulation).

Besonders vorteilhaft ist es auch, wenn eine Drehung der Förderrolle während des Anlaufvorgangs überwacht wird und ein zeitlicher Gradient eines Bremsmoments der Bremse bei Drehungen, welche gleichsinnig zum vom Antriebsmotor abgegebenen Drehmoment sind, gesenkt wird und bei Drehungen, welche gegensinnig zum vom Antriebsmotor abgegebenen Drehmoment sind, erhöht und insbesondere auch umgekehrt wird. Durch die vorgeschlagenen Maßnahmen kann das Bremsmoment relativ rasch gesenkt werden, um ein rasches Anfahren der Förderrolle zu ermöglichen. Stellt sich dabei heraus, dass sich die Förderrolle wegen eines zu hohen Lastmoments in unerwünschter Weise rückwärts dreht, so wird das Bremsmoment wieder erhöht, um diese Drehung zu stoppen oder wenigstens einzudämmen. Umgekehrt kann die Bremse noch rascher gelöst werden, wenn sich herausstellt, dass sich die Förderrolle in die gewünschte Richtung zu drehen beginnt und das Motormoment demzufolge größer ist als das Lastmoment. Durch die vorgeschlagenen Maßnahmen kann das Anfahren der Stückgüter unabhängig von ihrem Gewicht und dem dadurch resultierenden Lastmoment vergleichsweise rasch erfolgen.

Günstig ist es auch, wenn die Bremse durch ein stufenförmiges Steuersignal in einem Schritt gelöst/gelüftet wird. Dadurch ist der steuerungstechnische Aufwand für das Lösen/Lüften der Bremse besonders gering. In einer weiteren Variante kann das Lösen/Lüften der Bremse von einem vom Antriebsmotor abgegebenen Drehmoment abhängig gemacht werden. In diesem Fall wird die Bremse in einer vorteilhaften Ausführungsform der Fördereinrichtung durch ein stufenförmiges Steuersignal in einem Schritt gelöst/gelüftet, wenn das vom Antriebsmotor abgegebene Drehmoment einen vorgebbaren Wert aufweist. Dadurch kann eine unerwünschte Rückwärtsdrehung der Förderrolle weitgehend vermieden werden.

Günstig ist es darüber hinaus, wenn das vom Antriebsmotor abgegebene Drehmoment durch ein stufenförmiges Steuersignal in einem Schritt auf den besagten vorgebbaren Wert erhöht wird. Dadurch ist auch der steuerungstechnische Aufwand für das Anfahren des Antriebsmotors besonders gering.

Günstig ist es zudem, wenn der erste Energieversorgungsbus und/oder der zweite Energieversorgungsbus einen längs des ersten Rahmenprofils beziehungsweise längs des zweiten Rahmenprofils verlaufenden Isolator mit mehreren längsseitig offenen Aufnahmen und mehrere in dem Isolator angeordnete Stromleiter aufweist. Dadurch ist die Verlegung der Energieversorgungsbusse auf einfache Weise möglich. Beispielsweise werden die Stromleiter dazu einfach in den Isolator eingeclipst.

Vorteilhaft ist es auch, wenn je ein Stromleiter in je einer Aufnahme gelagert ist, und wobei der Formfaktor f eines Stromleiters, welcher als Quotient des Umfangs eines zum Querschnitt des Stromleiters flächenäquivalenten Kreises und des Umfangs des genannten Querschnitts des Stromleiters definiert ist, im Bereich von f= 0,88 bis zu f--1,00 liegt. Auf diese Weise sind auch komplexere Verläufe der Förderbahn, das sind insbesondere kurvenförmige Verläufe, Anstiege und helixförmige Verläufe, leicht realisierbar, da die Stromleiter in allen Richtungen im Wesentlichen dasselbe Biegeverhalten aufweisen. Insbesondere ist das Widerstandsmoment in x-Richtung und y-Richtung gleich oder annähernd gleich.

Darüber hinaus sind die Förderrollen mit Antriebsmotor und Bremse flexibel einsetzbar, da die Stromleiter praktisch in deren gesamten Verlauf kontaktiert werden können. Sinnvoll ist es in diesem Zusammenhang auch, den Isolator aus einem leicht biegbaren Material herzustellen. Insbesondere ist es von Vorteil, wenn der Isolator aus PVC-U hergestellt ist und/oder aus einem Material mit einem Elastizitätsmodul von rund 2900 N/mm$^2$ besteht.

Günstig ist es, wenn der Querschnitt eines Stromleiters polygonförmig ist, insbesondere regelmäßig polygonförmig. Im Speziellen kann der Querschnitt eines Stromleiters somit rechteckig aber auch annähernd quadratisch, quadratisch, sechseckig oder achteckig sein.

Günstig ist es auch, wenn der Querschnitt eines Stromleiters oval ist, insbesondere kreisförmig. Im Speziellen kann der Querschnitt eines Stromleiters somit oval aber auch annähernd kreisförmig oder kreisförmig sein.

Günstig ist es weiterhin, wenn die elektrische Verbindung zum Antriebsmotor, zur Bremse, zur ersten elektronischen Steuerung und/oder zur zweiten elektronischen Steuerung mit Hilfe von federnden und flächig auf den Stromleitern aufliegenden Kontakten erfolgt. Dadurch können einfach aufgebaute Kontakte für die elektrische Kontaktierung der Antriebselektronik und der Bremselektronik verwendet werden. Insbesondere können diese Kontakte in einer speziellen, von der Förderrolle getrennten Anschlussbox angeordnet sein. Eine Anschlussbox kann die erste elektronische Steuerung und eine andere Anschlussbox kann die zweite elektronische Steuerung beinhalten. Insbesondere können die Anschlussboxen gleichartig ausgebildet sein. Denkbar ist ganz allgemein auch, dass eine Steuerung vorgesehen wird, welche sowohl die Funktionen der ersten elektronischen Steuerung als auch die Funktionen der zweiten elektronischen Steuerung abdeckt. An sich baugleiche Steuerungen werden dann je nach Bedarf als erste oder zweite elektronische Steuerung eingesetzt.

Vorteilhaft ist es weiterhin, wenn die elektrische Verbindung von mehreren Abschnitten von Stromleitern mit Hilfe von federnden, die Stromleiter umgreifenden Kontakten erfolgt. Auf diese Weise kann der Übergangswiderstand klein gehalten werden, und es können vergleichsweise große Ströme über die genannten Kontakte geleitet werden. Besonders vorteilhaft ist es in diesem Zusammenhang, wenn je Stromleiter mehrere federnde und punktförmig, linienförmig oder flächig aufliegende Kontakte vorgesehen sind. Durch die Verwendung mehrerer in Längsrichtung der Stromleiter hintereinander liegender Kontakte gelingt die Kontaktierung auch dann noch, wenn in der Verlegung des Stromleiters Unebenheiten auftreten oder der Energieversorgungsbus bogenförmig verlegt wird, z.B. in einer Kurve der Förderbahn.

Besonders vorteilhaft ist es schließlich auch, wenn die Kontakte jeweils mehrere quer zum Stromleiter verlaufende und in Längsrichtung desselben voneinander beabstandete Kontaktzungen aufweisen. Dadurch kann der Stromübergangswiderstand verringert werden, da die Kontaktzungen Unebenheiten gut ausgleichen können und elektrisch wie einzelne, parallel geschaltete Kontakte wirken.

An dieser Stelle wird angemerkt, dass sich die zu der Fördereinrichtung offenbarten Varianten und daraus resultierenden Vorteile sinngemäß auch auf die Ausführungsformen der erfindungsgemäßen Betriebsverfahren beziehen und umgekehrt.

Zum besseren Verständnis der Erfindung wird diese anhand der nachfolgenden Figuren näher erläutert.

Es zeigen jeweils:

Fig. 1 einen beispielhaften Ausschnitt aus einer Fördereinrichtung in Schrägansicht von rechts oben;

Fig. 2 wie Fig. 1, nur von links oben;

Fig. 3 einen Querschnitt durch die Fördereinrichtung der Fig. 1 auf Höhe einer Förderrolle;

Fig. 4 eine Explosionsdarstellung einer Förderrolle aus Fig. 1 mit ausgewählten Bauteilen;

Fig. 5 ein Rahmenprofil mit einem darauf angeordneten Energieversorgungsbus, einer Anschlussbox für den Antriebsmotor der Förderrolle sowie mit einem Verbindungskabel zum Verbinden verschiedener Abschnitte des Energieversorgungsbusses;

Fig. 6 wie Fig. 5, nur in Explosionsdarstellung;

Fig. 7 wie Fig. 5, nur in Seitenansicht;

Fig. 8 einen Schnitt durch das Verbindungskabel beziehungsweise eine Frontansicht der in Fig. 5 dargestellten Anordnung;

Fig. 9 einen Schnitt durch die in Fig. 5 dargestellten Anordnung in Höhe der Anschlussbox;

Fig. 10 den Energieversorgungsbus mit dem Verbindungskabel schräg von hinten isoliert dargestellt;

Fig. 11 wie Fig. 10, nur im Querschnitt;

Fig. 12 den Energieversorgungsbus mit einer Anschlussbox schräg von hinten isoliert dargestellt;

Fig. 13 eine Anschlussbox im Schnitt;

Fig. 14 die Anschlussbox aus Fig. 12 in Vorderansicht;

Fig. 15 ein beispielhaftes elektrisches Schaltbild der elektronischen Steuerung für die Bremse;

Fig. 16 zeitliche Verläufe von Motormoment, Lastmoment, Gesamtmoment und Bremsmoment bei sukzessiver Änderung von Motormoment und Bremsmoment;

Fig. 17 ähnlich wie Fig. 16, jedoch mit sprunghafter Änderung von Motormoment und Bremsmoment;

Fig. 18 ähnlich wie Fig. 16, jedoch mit geregeltem Bremsmoment und

Fig. 19 die zeitlichen Verläufe von Weg und Drehzahl der Förderrolle zu dem in Fig. 18 dargestellten Beispiel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

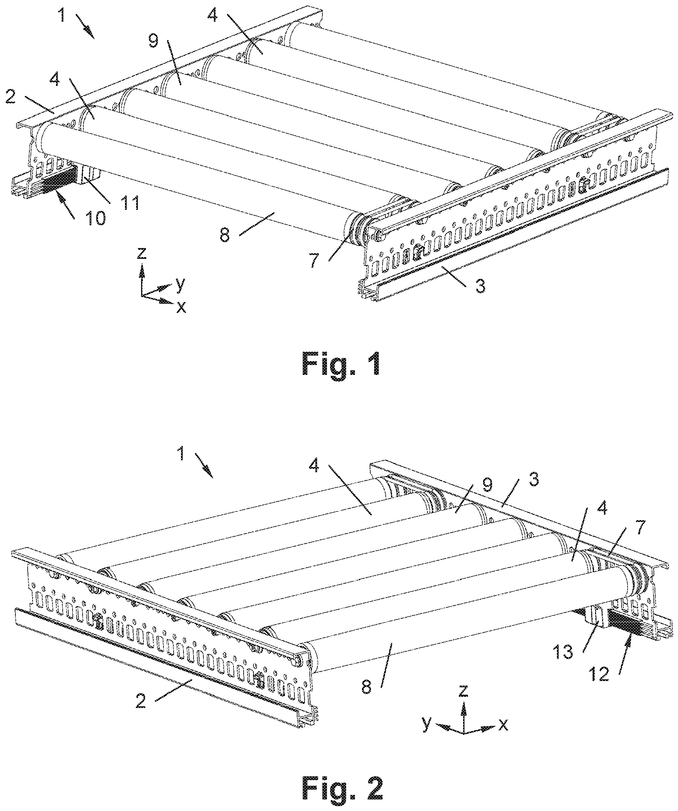

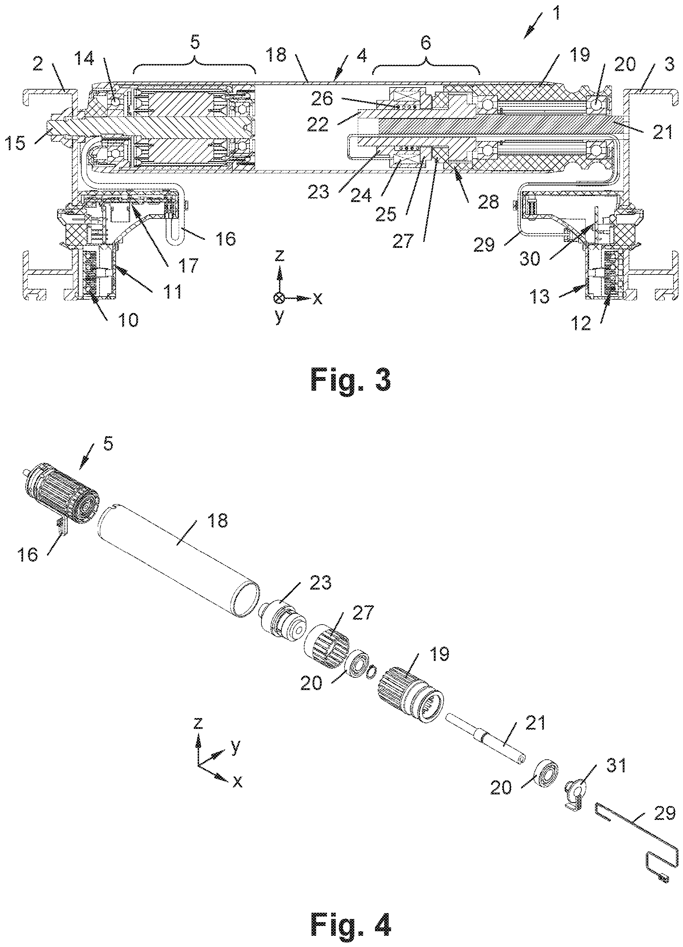

Die Figuren 1 und 2 zeigen einen beispielhaften Ausschnitt aus einer Fördereinrichtung 1 in Schrägansicht von rechts oben (Fig. 1) und von links oben (Fig. 2). Fig. 3 zeigt zudem einen Querschnitt durch die Fördereinrichtung 1. Zur besseren Orientierung ist in den Figuren ein xyz-Koordinatensystem eingezeichnet. Die Fördereinrichtung 1 dient generell dem Transport von Stückgütern (nicht dargestellt), beispielsweise von Behältern, Kartons, Tablaren und dergleichen.

Die Fördereinrichtung 1 umfasst ein erstes Rahmenprofil 2 und ein davon beabstandet verlaufendes, zweites Rahmenprofil 3. Weiterhin weist die Fördereinrichtung 1 mehrere zwischen den Rahmenprofilen 2, 3 angeordnete Förderrollen 4 auf, von denen zumindest einige jeweils einen elektrischen Antriebsmotor 5 und eine Bremse 6 umfassen. Der Antriebsmotor 5 und die Bremse 6 befinden sich im Inneren der Förderrolle 4 (siehe den Querschnitt auf Höhe der Förderrolle 4 in Fig. 3). Der Antriebsmotor 5 kann im Speziellen elektronisch geregelt sein und insbesondere auch zum Abbremsen der Förderrolle 4 und der damit transportierten Stückgüter eingesetzt werden. Aus der Fig. 3 ist überdies ersichtlich, dass der Antriebsmotor 5 näher am ersten Rahmenprofil 2 liegt als am zweiten Rahmenprofil 3 und die Bremse 6 näher am zweiten Rahmenprofil 3 liegt als am ersten Rahmenprofil 2.

Über Riemen 7 können weitere nicht motorisierte Förderrollen 8 über die Förderrollen 4 mit angetrieben werden. Zudem können auch leerlaufende Rollen 9 zwischen den Rahmenprofilen 2 und 3 angeordnet sein, so wie dies in der Fig. 1 dargestellt ist.

Zudem weist die Fördereinrichtung 1 einen längs des ersten Rahmenprofils 2 verlaufenden, ersten Energieversorgungsbus 10 auf, welcher elektrisch mit dem Antriebsmotor 5 verbunden oder gekoppelt ist. Konkret erfolgt die Anbindung des Antriebsmotors 5 an den ersten Energieversorgungsbus 10 mit Hilfe der ersten Anschlussbox 11.

Neben dem ersten Energieversorgungsbus 10 weist die Fördereinrichtung 1 einen zweiten Energieversorgungsbus 12 auf, welcher längs des zweiten Rahmenprofils 3 verlegt ist und welcher elektrisch mit der Bremse 6 verbunden oder gekoppelt ist. Konkret erfolgt die Anbindung der Bremse 6 an den zweiten Energieversorgungsbus 12 mit Hilfe der zweiten Anschlussbox 13.

Aus der Fig. 3 sind weitere Details der Konstruktion erkennbar. Beispielsweise ist der (Antriebs)Motor 5 mit Hilfe von Lagern 14 auf einer feststehenden, ersten Achse 15 gelagert, die am ersten Rahmenprofil 2 montiert ist. Mittels eines Kabels 16 ist der Motor 5 mit der ersten Anschlussbox 11, respektive der darin angeordneten ersten, elektronischen Steuerung 17 verbunden. Insbesondere kann der Motor 5 als bauliche Einheit ausgestaltet sein, die auf der ersten Seite im Rollenkörper 18 der Förderrolle 4 angeordnet und insbesondere in diesen eingeschoben ist.

Beispielsweise ist die Bremse 6 mit Hilfe von Lagern 20 auf einer feststehenden, zweiten Achse 21 gelagert, die am zweiten Rahmenprofil 3 montiert ist. Mittels eines Kabels 29 ist die Bremse 6 mit der zweiten Anschlussbox 13, respektive der darin angeordneten zweiten, elektronischen Steuerung 30 verbunden. Insbesondere kann die Bremse 6 als bauliche Einheit ausgestaltet sein, die auf der zweiten Seite im Rollenkörper 18 der Förderrolle 4 angeordnet und insbesondere in diesen eingeschoben ist.

Die beiden voneinander getrennten Achsen 15 und 21 tragen ebenfalls zu einer modularisierten Bauweise der Förderrolle 4 bei, da der Antriebsmotor 5 (die Motor-Baueinheit) und die Bremse 6 (die Bremsen-Baueinheit) dadurch nicht nur in elektrischer Hinsicht, sondern auch in mechanischer Hinsicht voneinander getrennt sind. Das einzige Bindeglied zwischen dem Antriebsmotor 5 und der Bremse 6 stellt somit in dieser vorteilhaften Ausführungsform der Rollenkörper 18 dar.

Auf dem zweiten Ende der Förderrolle 4 kann darüber hinaus das als Riemenscheibe ausgebildete Rollenende 19, wie dargestellt, mit Lagern 20 auf der Achse 21 gelagert sein. Das Rollenende 19 ist in den Rollenkörper 18 eingeschoben und mit diesem fix verbunden.

Die Bremse 6 umfasst in diesem Beispiel die auf der Achse 21 fest sitzende Trägerbuchse 22, auf der wiederum der Stator 23 mit einer darin integrierten Spule 24 montiert ist. Eine erste Reibscheibe 25 ist auf der Trägerbuchse 22 verschiebbar gelagert und wird mit Hilfe einer Feder 26 gegen eine zweite Reibscheibe 27 gedrückt, beziehungsweise wird die zweite Reibscheibe 27 mit Hilfe der Feder 26 zwischen der ersten Reibscheibe 25 und dem Bund der Trägerbuchse 22 eingeklemmt.

Über die Verzahnung 28 ist die zweite Reibscheibe 27 drehmomentstarr mit dem Rohrende 19 und demzufolge auch drehmomentstarr beziehungsweise drehfest mit dem Rollenkörper 18 verbunden. Durch die zwischen der zweiten Reibscheibe 27 und der ersten Reibscheibe 25 / der Trägerbuchse 22 mit der Feder 26 bewirkten Reibkraft wird der Rollenkörper 18 gegenüber der feststehenden Achse 21 gebremst (Bremsstellung).

Mittels der (bestromten) Spule 24 kann die erste Reibscheibe 25 gegen die Kraft der Feder 26 von der zweiten Reibscheibe 27 abgehoben werden, und die zweite Reibscheibe 27 wird dann auch nicht mehr gegen den Bund der Trägerbuchse 22 gedrückt. Zwischen dem Rollenkörper 18 und der starren Achse 21 entsteht dann keine (wesentliche) Drehmomentübertragung mehr (gelöste/gelüftete Stellung). Die Spule 24 ist mit Hilfe eines Kabels 29 mit der zweiten Anschlussbox 13 respektive mit einer darin eingebauten zweiten elektronischen Steuerung 30 verbunden.

Die Bremse 6 ist somit als elektromagnetisch betätigte, selbsthaltende Reibbremse ausgebildet. Die Reibbremse 6 kann prinzipiell als Betriebsbremse (also zum aktiven Abbremsen von Stückgütern/Objekten, die auf der Fördereinrichtung 1 befördert werden) und/oder als Feststellbremse (also zum Halten bereits unbewegter Stückgüter/Objekte, die beispielsweise mit Hilfe des Motors 6 abgebremst wurden) eingesetzt werden. Neben der Reibbremse wären grundsätzlich auch alternative Ausführungsformen denkbar. Insbesondere kann das Drehmoment zwischen der Achse 21 und dem Rollenkörper 18 auch formschlüssig übertragen werden, wenn die Bremse 6 als Feststellbremse eingesetzt wird. Die Bremse 6 kann dann beispielsweise als Zahnbremse oder Klauenbremse ausgebildet sein.

Denkbar ist auch, dass die Bremse 6 zum überwiegenden Teil als Feststellbremse, in Ausnahmefällen aber auch als Betriebsbremse eingesetzt wird. Beispielsweise kann das Bremsen bewegter Förderrollen 4 / Stückgüter im gewöhnlichen Betrieb über den Antriebsmotor 5 erfolgen. In Ausnahmefällen, zum Beispiel wenn ein Bremsen über den Antriebsmotor 5 wegen eines Ausfalls der Versorgungsspannung für denselben nicht möglich ist, wird die Bremse 6 als Betriebsbremse eingesetzt. Denkbar wäre beispielsweise auch, dass bei einem Not-Halt das Bremsen bewegter Förderrollen 4 / Stückgüter über den Antriebsmotor 5 und die Bremse 6 erfolgt.

Insbesondere ist es auch von Vorteil, wenn das Bremsmoment der Bremse 6 größer ist als das Antriebsmoment des Antriebsmotors 5. Auf diese Weise wird verhindert, dass sich die Förderrolle 4 in Bewegung setzen kann, wenn der Antriebsmotor 5 - beispielsweise bei einer Störung in der Ansteuerung - trotz aktivierter Bremse 6 angesteuert wird. Wird die Bremse 6 (aus welchem Grund auch immer) in die Bremsstellung gebracht, dann wird die Förderrolle 4 auch bei laufendem Antriebsmotor 5 (bis zum Stillstand) abgebremst, wodurch die Fördereinrichtung 1 besonders betriebssicher ist.

Ergänzend zeigt die Fig. 4 eine Explosionsdarstellung der Förderrolle 4 mit ausgewählten Bauteilen, insbesondere auch das noch nicht erwähnte außen auf der der Förderrolle 4 sitzende Lagerschild 31. Das Lagerschild 31 umfasst einen scheibenförmigen ersten Abschnitt zur Abdeckung des Inneren des Rollenkörpers 18, welcher fix gegenüber der Achse 21 angeordnet und normal zu dieser ausgerichtet ist. Zudem umfasst das Lagerschild 31 einen zweiten Abschnitt, welcher am ersten Abschnitt axial hervorragt und eine Führungsvorrichtung für das Kabel 29 aufweist.

Aus dem bisher Gesagten und im Speziellen aus der Fig. 3 gehen nun insbesondere folgende Merkmale hervor:
Der Antriebsmotor 5 ist innerhalb der Förderrolle 4 von der Bremse 6 elektrisch getrennt. Das heißt, innerhalb der Förderrolle 4 gibt es keine elektrische Verbindung zwischen dem Antriebsmotor 5 und der Bremse 6. Insbesondere gibt es in der Förderrolle 4 auch keinen zwischen Antriebsmotor 5 und Bremse 6 verlaufenden Energieversorgungsbus.

Weiterhin umfasst die Fördereinrichtung 1 die dem Antriebsmotor 5 zugeordnete erste elektronische Steuerung 17 und die der Bremse 6 zugeordnete zweite elektronische Steuerung 30, wobei die erste elektronische Steuerung 17 von der zweiten elektronischen Steuerung 30 innerhalb der Förderrolle 4 elektrisch getrennt ist. Das heißt, innerhalb der Förderrolle 4 gibt es keine elektrische Verbindung zwischen der ersten elektronischen Steuerung 17 und der zweiten elektronischen Steuerung 30.

In diesem Beispiel ist die erste elektronische Steuerung 17 (mittelbar über die erste Anschlussbox 11) auf dem ersten Rahmenprofil 2 angeordnet, und die zweite elektronische Steuerung 30 ist (mittelbar über die zweite Anschlussbox 13) auf dem zweiten Rahmenprofil 3 angeordnet.

Denkbar wäre auch, dass die erste elektronische Steuerung 17 im Inneren der Förderrolle 4 angeordnet ist und dem ersten Rahmenprofil 2 näher liegt als dem zweiten Rahmenprofil 3. Insbesondere könnte die erste elektronische Steuerung 17 in der Fig. 3 links vom Antriebsmotor 5 angeordnet sein.

Weiterhin wäre denkbar, dass die zweite elektronische Steuerung 30 im Inneren der Förderrolle 4 angeordnet ist und dem zweiten Rahmenprofil 3 näher liegt als dem ersten Rahmenprofil 2. In der Fig. 3 könnte die zweite elektronische Steuerung 30 daher insbesondere rechts von der Bremse 6 angeordnet sein.

Vorteilhaft ist es auch, wenn die dem Antriebsmotor 5 (und bei Einbau in die Förderrolle 4 gegebenenfalls der ersten elektronischen Steuerung 17) zugeordnete Verkabelung 16 ausschließlich auf der dem ersten Rahmenprofil 2 näher liegenden Seite der Förderrolle 4 (hier links) aus der Förderrolle 4 herausgeführt ist. Weiterhin ist es von Vorteil, wenn die der Bremse 6 (und bei Einbau in die Förderrolle 4 gegebenenfalls der zweiten elektronischen Steuerung 30) zugeordnete Verkabelung 29 ausschließlich auf der dem zweiten Rahmenprofil 3

näher liegenden Seite der Förderrolle 4 (hier rechts) aus der Förderrolle 4 herausgeführt ist.

Insgesamt wird die Montage der Förderrolle 4 durch ihren speziellen Aufbau vereinfacht, da kein Verbindungskabel zwischen Motor 5 und Bremse 6 durch den Rollenkörper 18 hindurch gefädelt werden muss. Zudem ist die Verkabelung zum Antriebsmotor 5 und die Verkabelung zur Bremse 6 unabhängig von der Länge der Förderrolle 4, da die Kabel 16 und 29 von beiden Seiten zugeführt werden. Wenn - als grobe Richtschnur - der Abstand der Förderrollen 4 in der Förderrichtung y kleiner ist als deren Länge, was insbesondere bei leistungsstarken Anlagen der Fall ist, können durch den speziellen Aufbau der Fördereinrichtung 1 auch elektrische Leitungen eingespart werden, da der durch den zweiten Energieversorgungsbus 12 für die Bremse 6 hinzukommende Teil geringer ist als eine alternative Verkabelung durch den Rollenkörper 18 hindurch.

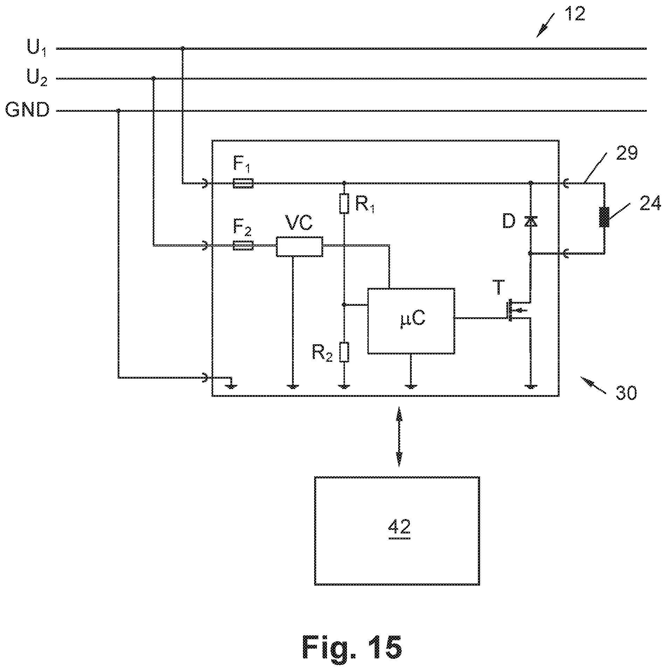

Ergänzend wird erwähnt, dass neben dem ersten und dem zweiten Energieversorgungsbussen 10 und 12 auch (nicht dargestellte) Datenbusse entlang des ersten Rahmenprofils 2 respektive entlang des zweiten Rahmenprofils 3 verlegt sein können, um Datensignale zwischen einer übergeordneten Steuerung 42 (siehe auch Fig. 15) und der ersten elektronischen Steuerung 17 beziehungsweise der zweiten elektronischen Steuerung 30 übertragen zu können. Zudem können im Verlauf der Fördereinrichtung 1 auch nicht dargestellte Photodetektoren angeordnet sein, um den Belegt-Zustand eines Förderabschnitts ermitteln zu können.

Zudem wird auch festgehalten, dass die Förderrollen 4 alle in der gleichen Lage zwischen dem ersten und dem zweiten Rahmenprofil 2 und 3 eingebaut sind. In dem konkret darstellten Beispiel sind die Motoren 5 der Förderrollen 4 alle auf der linken Seite angeordnet, wohingegen die Bremsen 6 auf der rechten Seite 6 angeordnet sind. Selbstverständlich könnten die Bremsen 6 auch links und die Motoren 5 rechst angeordnet sein. Denkbar wäre weiterhin auch, dass einige Antriebsmotoren 5 / Bremsen 6 links und einige Bremsen 6 / Antriebsmotoren 5 rechts angeordnet sind. Dies ist insbesondere dann möglich, wenn der erste Energieversorgungsbus 10 und der zweite Energieversorgungsbus 12, respektive entlang der Rahmenprofile 2 und 3 verlegte Datenbusse, gleich aufgebaut sind.

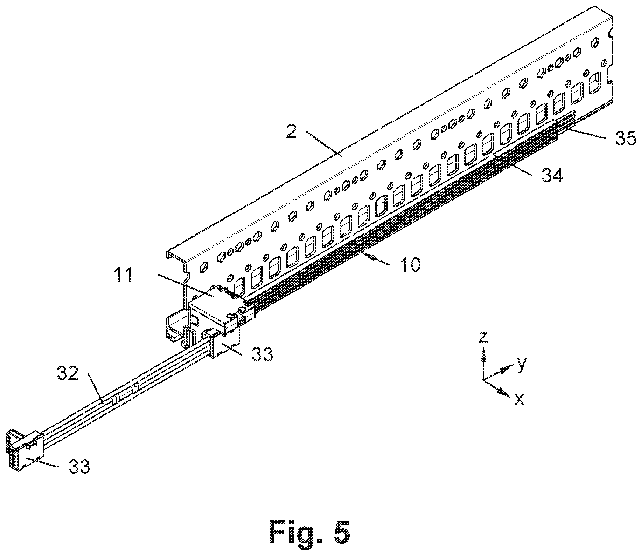

Die Fig. 5 zeigt nun ein Detail der Fördereinrichtung 1, konkret das Rahmenprofil 2 mit dem darauf angeordneten ersten Energieversorgungsbus 10, einer ersten Anschlussbox 11 sowie einem Verbindungskabel 32, das mehrere Abschnitte des Energieversorgungsbusses 10 miteinander verbindet. Dazu sind am Verbindungskabel 32 Stecker 33 angeordnet, welche in die Anschlussboxen 11 eingesteckt werden können. In der Fig. 5 ist zudem erkennbar, dass der Energieversorgungsbus 10 einen längs des Rahmenprofils 2 verlaufenden Isolator 34 mit mehreren längsseitig offenen Aufnahmen umfasst, in denen mehrere Stromleiter 35 angeordnet sind, wobei je ein Stromleiter 35 in je einer Aufnahme gelagert ist. Über die Anschlussboxen 11 sind die Stromleiter 35 mit der ersten elektronischen Steuerung 17 elektrisch verbunden. Vorteilhaft ist je (motorisierter) Förderrolle 4 je eine Anschlussbox 11 vorgesehen, und jede Anschlussbox 11 ist an die Stromleiter 35 angeschlossen. Denkbar ist natürlich auch, dass eine Anschlussbox 11 für mehrere Förderrollen 4 vorgesehen ist.

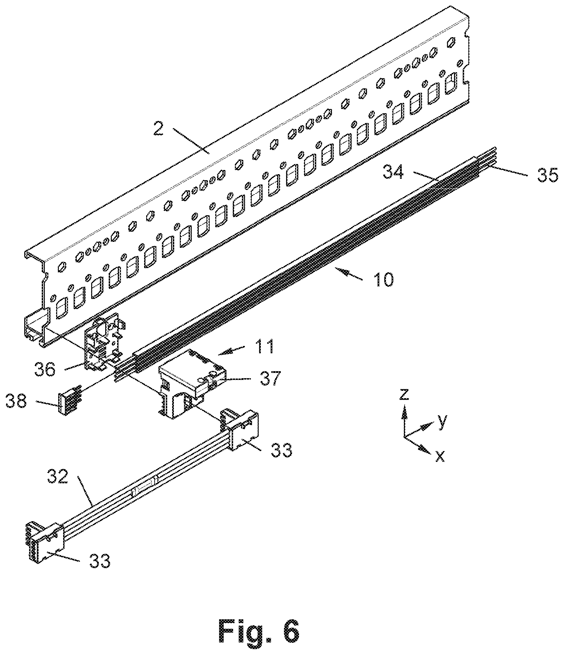

Fig. 6 zeigt den bereits in Fig. 5 dargestellten Ausschnitt der Fördereinrichtung 1 nun in Explosionsdarstellung. In der Fig. 6 ist erkennbar, dass die Anschlussbox 11 eine Grundplatte 36 sowie einen Aufsteckteil 37 aufweist. Zusätzlich ist auch erkennbar, dass der Energieversorgungsbus 10 mit einer Endkappe 38 abgeschlossen ist.

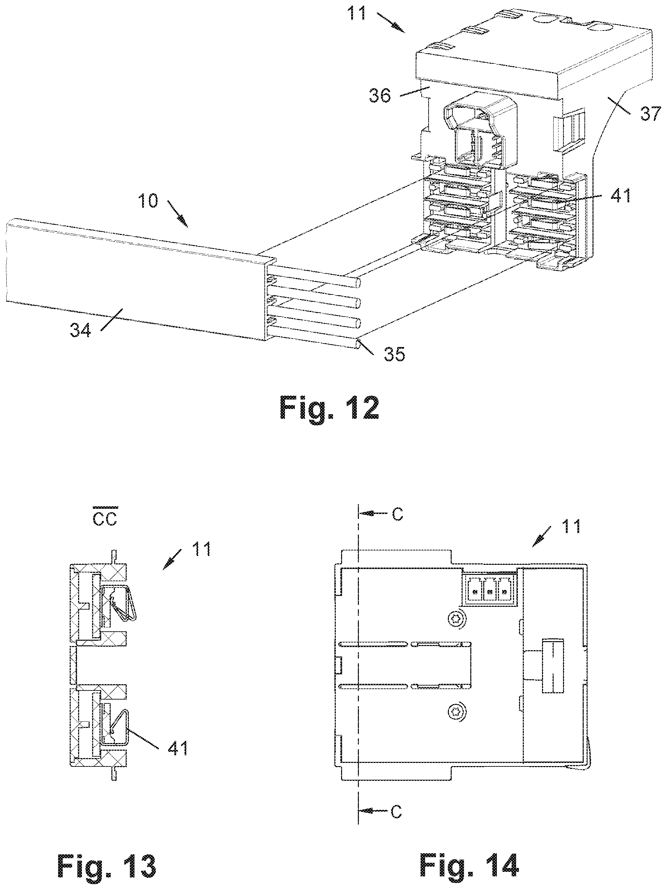

Beim Aufbau der Fördereinrichtung 1 werden zuerst die Grundplatten 36 am/im Rahmenprofil 2 befestigt (z.B. über eine Rastverbindung eingeclipst). Danach wird der Energieversorgungsbus 10 montiert und durch Aufstecken des Aufsteckteils 37 kontaktiert, insbesondere mit der ersten elektronischen Steuerung 17 (siehe auch die Figuren 12 bis 14). Unterschiedliche Abschnitte des Energieversorgungsbusses 10 können schließlich durch Einstecken eines Verbindungskabels 32 miteinander verbunden werden.

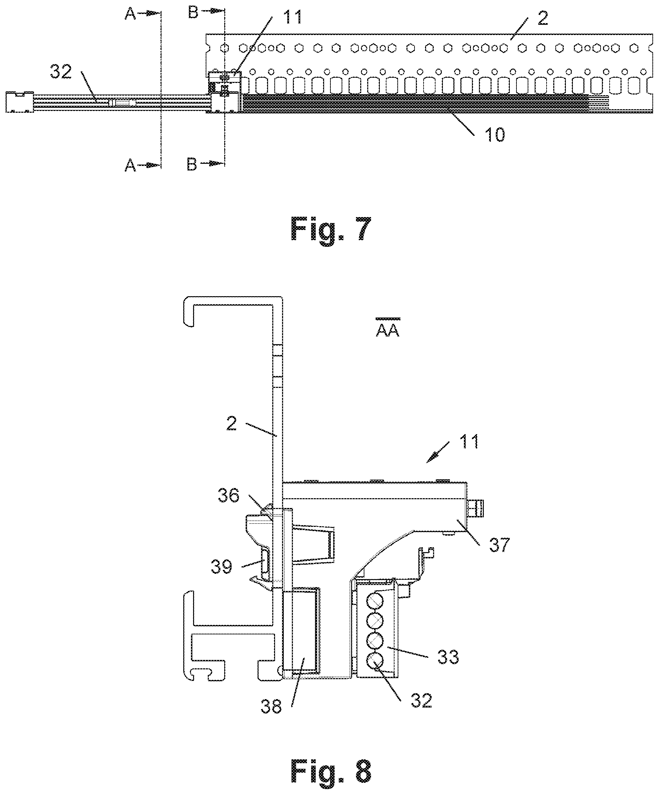

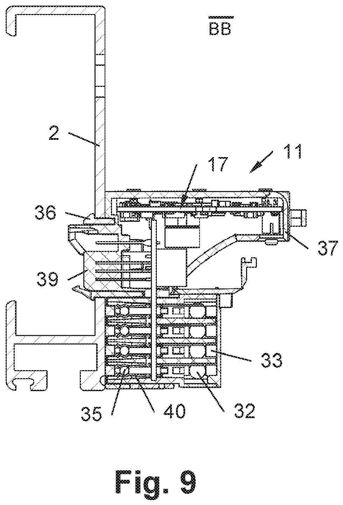

Die Fig. 7 zeigt die bereits in den Figuren 5 und 6 dargestellte Anordnung nun in Seitenansicht, die Fig. 8 zeigt einen Querschnitt AA und die Fig. 9 einen Querschnitt BB. In den Fig. 8 und 9 ist gut die durch das Rahmenprofil 2 hindurch ragende Grundplatte 36 sowie deren Rastverbindung im Rahmenprofil 2 zu sehen. Darüber hinaus ist auch eine Buchse 39 für einen Datenbus zu sehen, der am Rahmenprofil 2 außen und damit gegenüberliegend dem Energieversorgungsbus 10 angeordnet ist. In der Fig. 9 sind weiterhin auch Kontakte 40 des Steckers 33 zu sehen, welche federnd sind und die Stromleiter 35 umgreifen. Schließlich ist auch die (optional) in der Anschlussbox 11 angeordnete, erste elektronische Steuerung 17 dargestellt, welche unter anderem der Kommunikation mit einer übergeordneten Steuerung 42 (vergleiche Fig. 15) und der Steuerung des Antriebsmotors 5 dient. Die Stromleiter 35 sind in diesem Beispiel identisch aufgebaut. Prinzipiell ist aber auch die Verwendung von unterschiedlichen Stromleitern 35, insbesondere mit unterschiedlichem Querschnitt, denkbar.

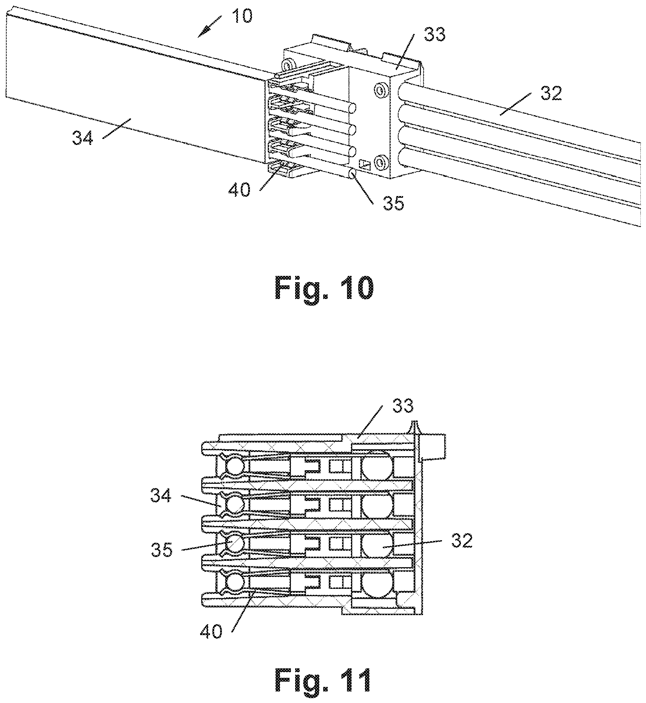

Fig. 10 zeigt nun den Energieversorgungsbus 10 mit dem Verbindungskabel 32 schräg von hinten isoliert dargestellt, die Fig. 11 dieselbe Anordnung im Schnitt. In den Figuren 10 und 11 ist insbesondere gut erkennbar, dass der Querschnitt der Stromleiter 35 kreisförmig ist. Dies ist zwar vorteilhaft, der Querschnitt könnte aber beispielsweise auch im Wesentlichen quadratisch, quadratisch, sechseckig oder achteckig sowie oval (z.B. ellipsenförmig) sein.

Generell liegt der Formfaktor f des Stromleiters 35, welcher als Quotient des Umfangs eines zum Querschnitt des Stromleiters 35 flächenäquivalenten Kreises und des Umfangs des genannten Querschnitts des Stromleiters 35 definiert ist, vorteilhaft im Bereich von f= 0,88 bis zu f=1,00. Weist der Stromleiter 35 einen kreisförmigen Querschnitt auf, so beträgt der Formfaktor demgemäß f=1,00.

Weist der Stromleiter 35 zum Beispiel einen quadratischen Querschnitt mit 1 mm x 1 mm auf, so beträgt dessen Fläche A=1 mm$^2$ und dessen Umfang U=4 mm. Der Durchmesser des flächenäquivalenten Kreises beträgt

$$d = \sqrt{\frac{4 \cdot A}{\pi}} = \sqrt{\frac{4}{\pi}} = 1,13 \, mm$$

Dessen Umfang U beträgt

$$U = d \cdot \pi = 1,13 \cdot \pi = 3,54 \, mm$$

Der Formfaktor f ist somit

$$f = \frac{U_K}{U_L} = \frac{3,54}{4,00} = 0,89$$

Insbesondere aus der Fig. 10 ist auch erkennbar, dass die federnden Kontakte 40, welche die Stromleiter 35 umgreifen, jeweils mehrere Kontaktzungen aufweisen, die gabelförmig mit quer zum Stromleiter 35 verlaufenden und in Längsrichtung des Stromleiters 35 voneinander beabstandeten Kontaktzungen ausgeführt sind, die in etwa die Form von Gabelzinken haben. Dadurch kann der Stromübergangswiderstand verringert werden, da die Kontaktzungen Unebenheiten gut ausgleichen können und elektrisch wie einzelne, parallel geschaltete Kontakte wirken. Vorteilhaft verbessern einzelne Kontaktzungen auch den elektrischen Kontakt, wenn die Förderbahn und damit der Energieversorgungsbus 10 bogenförmig verlaufen.

Vorteilhaft ist es weiterhin, wenn - wie in Fig. 11 erkennbar - die freie Biegelänge des Kontakts 40 bzw. der Kontaktzungen etwa dem drei- bis vierfachem Durchmesser des genannten, flächenäquivalenten Kreises entspricht. Dadurch ergibt sich ein guter Kompromiss zwischen Strombelastbarkeit des Kontakts 40 und dessen Auflagekraft auf dem Stromleiter 35.

Die Fig. 12 zeigt den Energieversorgungsbus 10 wiederum schräg von hinten isoliert dargestellt, nun aber in Verbindung mit einer Anschlussbox 11. Nach dieser Ausführung ist die erste elektronische Steuerung 17 innerhalb der Anschlussbox 11 angeordnet und mit Kontakten 41, welche federnd auf den Stromleitern 35 aufliegen, elektrisch verbunden. Die Kontakte 41 können, wie dargestellt, beispielsweise durch Kontaktbügel gebildet sein. Besonders vorteilhaft ist es dabei, wenn - wie in der Fig. 12 dargestellt - mehrere (hier im Speziellen zwei) Kontakte 41 je Stromleiter 35 vorgesehen sind, die innerhalb der Anschlussbox 11 elektrisch verbunden sind. Beispielsweise können die Kontakte 41 aus einem einzigen Kupferstreifen gefertigt sein. Durch die Verwendung mehrerer in Längsrichtung der Stromleiter 35 hintereinander liegender Kontakte 41 gelingt die Kontaktierung auch dann noch, wenn in der Verlegung des Stromleiters 35 Unebenheiten auftreten oder der Energieversorgungsbus 10 bogenförmig verlegt wird, z.B. in einer Kurve der Förderbahn.

Die Figuren 13 und 14 zeigen die Anschlussbox 11 nun im Detail (die Fig. 13 im Schnitt, die Fig. 14 in Vorderansicht). Gut zu erkennen sind in der Fig. 13 insbesondere die federnd auf den Stromleitern 35 aufliegenden Kontakte 41. Für den oberen in der Fig. 13 dargestellten Kontakt 41 sind dabei zwei Stellungen dargestellt, einmal die unbelastete und einmal die bei Auflage auf dem Stromleiter 35 eingenommene Stellung.

Die in den Figuren 12 bis 14 dargestellte Kontakte 41 liegen linienförmig auf den Stromleitern 35 auf. Denkbar wäre natürlich auch, dass diese punktförmig oder flächig auf diesen aufliegen.

Die im Rahmen der Figuren 5 bis 14 offenbarte technische Lehre wurde anhand der linken, dem Antriebsmotor 5 zugeordneten Seite der Fördereinrichtung 1 erläutert. Es ist diese aber auch uneingeschränkt auf die rechte, der Bremse 6 zugeordneten Seite der Fördereinrichtung 1 anwendbar. An die Stelle des ersten Rahmenprofils 2 tritt dann das zweite Rahmenprofil 3, an die Stelle des ersten Energieversorgungsbusses 10 der zweite Energieversorgungsbus 12, an die Stelle der ersten Anschlussbox 11 die zweite Anschlussbox 13, an die Stelle der ersten elektronischen Steuerung 17 tritt die zweite elektronische Steuerung 30 und an die Stelle des Antriebsmotors 5 tritt die Bremse 6. Die erste Anschlussbox 11 und die zweite Anschlussbox 13 können insbesondere gleiche Außenabmessungen und gleiche Kontakte 40 und 41 aufweisen. Auch der erste Energieversorgungsbus 10 und der zweite Energieversorgungsbus 12 können gleiche Außenabmessungen und gleiche Belegung der Stromleiter 35 aufweisen. Schließlich dient auch die (optional) in der Anschlussbox 13 angeordnete, zweite elektronische Steuerung 30 unter anderem der Kommunikation mit der übergeordneten Steuerung 42 (vergleiche Fig. 15) und der Steuerung der Bremse 6.

Generell ist es von Vorteil, wenn der erste Energieversorgungsbus 10 jeweils zumindest drei voneinander isolierte Stromleiter 35 aufweist, wobei ein erster Stromleiter 35 mit einem Energieversorgungseingang des Antriebsmotors 5 verbunden ist, ein zweiter Stromleiter 35 mit einem Energieversorgungseingang der ersten elektronischen Steuerung 17 verbunden ist und zumindest ein dritter Stromleiter 35 mit einem Masseanschluss der genannten Baugruppen verbunden ist. Generell ist es alternativ oder zusätzlich auch von Vorteil, wenn der zweite Energieversorgungsbus 12 jeweils zumindest drei voneinander isolierte Stromleiter 35 aufweist, wobei ein erster Stromleiter 35 mit einem Energieversorgungseingang der Bremse 6 verbunden ist, ein zweiter Stromleiter 35 mit einem Energieversorgungseingang der zweiten elektronischen Steuerung 30 verbunden ist und zumindest ein dritter Stromleiter 35 mit einem Masseanschluss der genannten Baugruppen verbunden ist. Auf diese Weise können der Antriebsmotor 5 und die Bremse 6 mit einer ersten Spannung und die dem Antriebsmotor 5 zugeordnete erste elektronische Steuerung 17 und/oder die der Bremse 6 zugeordnete zweite elektronische Steuerung 30 mit einer zweiten, niedrigeren Spannung betrieben werden. Insbesondere kann für die erste Spannung ein Wert von 48V und für die zweite Spannung ein Wert von 24V vorgesehen sein.

Vorteilhaft ist es nun, wenn ein die erste Spannung (also z.B. 48V) führender Stromkreis, welcher die Bremse 6 beinhaltet, getrennt wird, wenn ein Abfall der ersten Spannung (also z.B. 48V) untere einen ersten vorgebbaren Schwellwert festgestellt wird und/oder ein Abfall der zweiten Spannung (also z.B. 24V) unter einen zweiten vorgebbaren oder vorgegebenen Schwellwert festgestellt wird oder vorliegt.

Die Fig. 15 zeigt dazu eine beispielhafte Ausführungsform der zweiten elektronischen Steuerung 30, welche elektrisch mit dem zweiten Energieversorgungsbus 12 verbunden ist. Der mit der zweiten Spannung $U_2$ verbundene Teil der zweiten elektronischen Steuerung 30 umfasst insbesondere zwei Sicherungen $F_1$ und $F_2$, einen Spannungsregler VC, welcher beispielsweise aus einer zweiten Spannung $U_2$ von 24V eine Spannung von 5V generiert, einen Microcontroller $\mu$C, einen Transistor T, eine Freilaufdiode D und einen Spannungsteiler $R_1$ und $R_2$. Mit Hilfe der Leitung 29 ist die Spule 24 der Bremse 6 parallel zur Freilaufdiode D geschaltet.

Die Funktion der dargestellten Schaltung ist nun wie folgt:

Mit Hilfe des Spannungsteilers $R_1$, $R_2$ und des Microcontrollers $\mu$C wird die Höhe der ersten Spannung $U_1$ überwacht. Fällt diese unter einen vorgegebenen Wert, so trennt der Microcontroller $\mu$C die Spule 24 mit Hilfe des Transistors T von der Spannungsversorgung. Da die Bremse 6 selbsthaltend ausgebildet ist, wird die Förderrolle 4 in Folge angehalten (Bremsstellung).

Der Transistor T trennt die Spule 24 aber auch von der ersten Spannung $U_1$, wenn die zweite Spannung $U_2$ unter einen bestimmten (vorgegebenen) Wert fällt, und der Microcontroller $\mu$C nicht mehr betrieben werden kann.

Der Transistor T bildet in diesem Beispiel demzufolge ein Schaltelement, das in einem zur Bremse 6 führenden Stromkreis liegt und geöffnet wird, wenn ein Abfall der ersten Spannung $U_1$ an einem Energieversorgungseingang der Bremse 6 unter einen ersten vorgebbaren Schwellwert festgestellt wird und auch dann, wenn ein Abfall der zweiten Spannung $U_2$ an einem Energieversorgungseingang der zweiten elektronischen Steuerung 30 unter einen zweiten vorgebbaren/vorgegebenen Schwellwert festgestellt wird respektive vorliegt. Der Betrieb der Förderrolle 4 ist damit besonders sicher. Die zweite Spannung $U_2$ kann natürlich auch aktiv gemessen werden, um einen Abfall derselben unter einen zweiten vorgebbaren Schwellwert detektieren zu können.

Die ergriffenen Maßnahmen wurden anhand der zweiten elektronischen Steuerung 30 und der Bremse 6 erläutert. Selbstverständlich können diese in analoger Weise auch auf die erste elektronische Steuerung 17 und den Antriebsmotor 5 angewandt werden. Dieser kann ebenfalls außer Betrieb genommen werden, wenn die erste Spannung $U_1$ und/oder zweite Spannung $U_2$ unter vorgebbare Schwellwerte fallen.

Besonders vorteilhaft ist es auch, wenn die zweite elektronische Steuerung 30 oder eine dieser übergeordnete Steuerung 42 dazu ausgebildet ist, die Bremse 6 aufgrund eines Befehls zum Anfahren der Förderrolle 4 nach dem Anlegen einer elektrischen Spannung an den Antriebsmotor 5 erst zeitverzögert vollständig zu lösen beziehungsweise zu lüften. Das heißt, aufgrund eines Befehls von einer übergeordneten Steuerung 42, beispielsweise einem Leitrechner, zum Anfahren der Förderrolle 4 wird zuerst eine elektrische Spannung an den Antriebsmotor 5 angelegt und dann die Bremse 6 zeitverzögert vollständig gelöst beziehungsweise gelüftet.

Beispielsweise kann der Befehl zum Anfahren der Förderrolle 4 (nur) von der ersten elektronischen Steuerung 17 empfangen werden, welche daraus ein Signal an die zweite elektronische Steuerung 30 zum zeitverzögerten Lösen/Lüften der Bremse 6 ableitet. Die Zeitverzögerung kann dabei in der ersten elektronischen Steuerung 17 realisiert sein, indem das genannte Signal mit der entsprechenden Verzögerung an die zweite elektronische Steuerung 30 abgesetzt wird. Die Zeitverzögerung kann aber auch in der zweiten elektronischen Steuerung 30 realisiert sein, indem die Bremse 6 zeitverzögert nach Erhalt des genannten Signals gelöst/gelüftet wird. Im Hinblick auf das Signal zum Lösen/Lüften der Bremse 6 kann die erste elektronische Steuerung 17 bei dieser Ausführungsform als der zweiten elektronischen Steuerung 30 übergeordnet angesehen werden.

Denkbar ist auch, dass der von der übergeordneten Steuerung 42 ausgesandte Befehl zum Anfahren der Förderrolle 4 quasi simultan von der ersten elektronischen Steuerung 17 und der zweiten elektronischen Steuerung 30 erhalten wird und die zweite elektronische Steuerung 30 die Bremse 6 nach Erhalt des Befehls zeitverzögert löst/lüftet.

Die übergeordnete Steuerung 42 kann beispielsweise auch ein Controller mehrerer Förderrollen 4 sein, der wiederum von einem Leitrechner angesteuert wird. Beispielsweise kann dieser Controller die Ansteuerung der ersten elektronischen Steuerung 17 und der zweiten elektronischen Steuerung 30 im Hinblick auf ein zeitverzögertes Lüften/Lösen der Bremse 6 übernehmen.

Im Endergebnis heißt das, dass die "Intelligenz" zur Durchführung des zeitverzögerten Lüften/Lösen der Bremse 6 in der ersten elektronischen Steuerung 17, in der zweiten elektronischen Steuerung 30 oder in der übergeordneten Steuerung 42 enthalten sein kann.

Die Datenverbindung zwischen der übergeordneten Steuerung 42 und der zweiten elektronischen Steuerung 30 ist in der Fig. 15 lediglich mit einem Doppelpfeil angedeutet. In analoger Weise kann auch die Datenverbindung zwischen der der übergeordneten Steuerung 42 und der ersten elektronischen Steuerung 30 erfolgen. Wenn die erste elektronische Steuerung 17 als übergeordnete Steuerung fungiert, besteht eine Datenverbindung von dieser zur zweiten elektronischen Steuerung 30. Die Datenverbindungen können in an sich bekannter Weise drahtbasiert sein oder auch per Funk erfolgen, insbesondere über Busnachrichten.

An dieser Stelle wird auch besonders darauf hingewiesen, dass sich die genannte Zeitverzögerung auf das vollständige Lösen oder Lüften der Bremse 6 bezieht und das Lösen der Bremse auch schon beim Anlegen der Spannung an den Antriebsmotor 5 oder sogar schon davor eingeleitet werden kann.

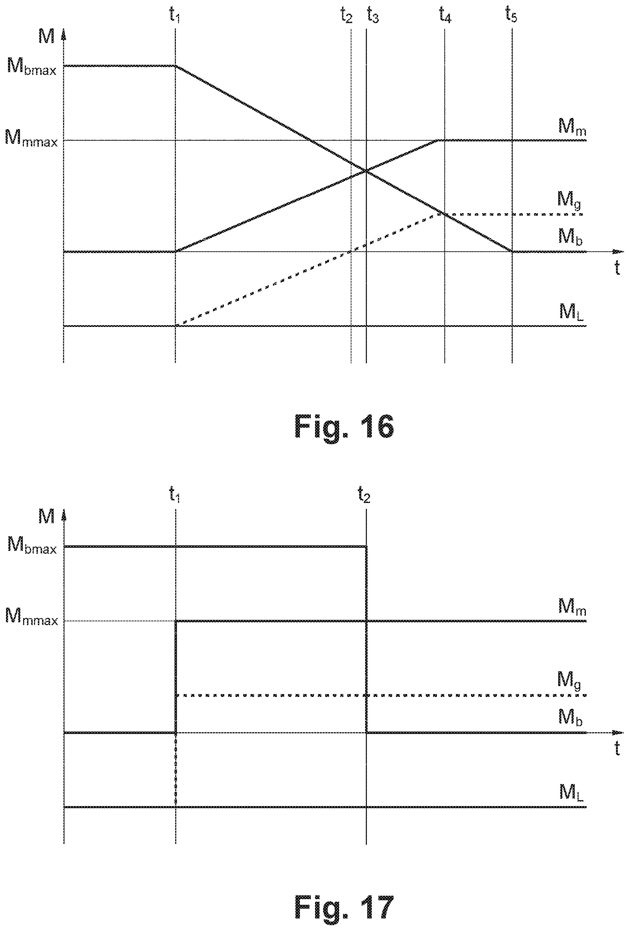

Die Fig. 16 zeigt dazu ein erstes Beispiel der dabei ablaufenden Vorgänge anhand eines zeitlichen Drehmomentverlaufs des vom Antriebsmotor 5 erzeugten Motormoments $M_m$, des von einem auf der Förderrolle 4 befindlichen Stückguts (Last) erzeugten Lastmoments $M_L$, des daraus resultierenden Gesamtmoments $M_g = M_m + M_L$, sowie des von der Bremse 6 erzeugten Bremsmoments $M_b$. In diesem Beispiel wird zu einem Zeitpunkt $t_1$ damit begonnen, das Motormoment $M_m$ sukzessive (hier linear) auf einen konstanten Endwert zu erhöhen und das Bremsmoment $M_b$ sukzessive (hier linear) auf den Wert Null zu senken.

Generell kann ein gewünschtes Motormoment $M_m$ oder Bremsmoment $M_b$ durch Anlegen einer entsprechenden Gatespannung an den Transistor T realisiert werden. Denkbar ist aber auch, dass der Transistor T in an sich bekannter Weise mit veränderlichem Tastverhältnis pulsierend ein- und ausgeschaltet wird, um ein quasikontinuierliches Steuersignal nachzubilden. Beides kann durch den Microcontroller µC erfolgen.

Denkbar ist auch, dass die Spannung an der Spule 24 gesenkt wird (z.B. auf die Hälfte), wenn die Bremse 6 vollständig gelöst/gelüftet ist, um elektrische Energie einzusparen. Für das Halten der ersten Reibscheibe 25 in der Offenstellung ist nämlich in der Regel ein geringeres magnetisches Feld nötig als zum Bewegen derselben aus der Bremsstellung.

Vorzugsweise liegt das maximale Bremsmoment $M_{bmax}$, wie in der Fig. 16 dargestellt, über dem maximalen, vom Antriebsmotor 5 erzeugbaren Motormoment $M_{mmax}$. Auf diese Weise kann die Förderrolle 4 bei einem Defekt der ersten elektronischen Steuerung 17 in jedem Fall angehalten werden.

Zu einem Zeitpunkt $t_2$ halten sich das Motormoment $M_m$ und das Lastmoment $M_L$ nun die Waage, ein Halten der Bremse 6 wäre ab diesem Zeitpunkt eigentlich nicht mehr nötig. Zu einem Zeitpunkt $t_3$ halten sich das Motormoment $M_m$ und das Bremsmoment $M_b$ die Waage. Ohne Lastmoment $M_L$ würde die Förderrolle 4 in diesem Zustand gerade noch stillstehen. Zu einem Zeitpunkt $t_4$ übersteigt das Gesamtmoment $M_g$ schließlich das Bremsmoment $M_b$, und die Förderrolle 4 beginnt sich zu drehen. Zu einem Zeitpunkt $t_5$ ist die Bremse 6 schließlich vollständig geöffnet/gelüftet. Selbstverständlich ist das Diagramm in Fig. 16 rein illustrativ zu sehen, und es sind auch viele andere Drehmomentverläufe möglich. Beispielsweise kann eine sukzessive Änderung des Motormoments $M_m$ respektive des Bremsmoments $M_b$ auch von der linearen Form abweichen. Auch kann der Bremsvorgang nach dem Zeitpunkt $t_1$ oder selbst davor eingeleitet werden. Durch diese Art der Ansteuerung erfolgt der Anlaufvorgang der Förderrolle 4 besonders sanft.

Die Fig. 17 zeigt ein weiteres Beispiel der beim Anlauf der Förderrolle 4 ablaufenden Vorgänge anhand weiterer zeitlicher Drehmomentverläufe. Dabei wird das Motormoment $M_m$ zu einem Zeitpunkt $t_1$ sprunghaft auf einen vorgegebenen oder vorgebbaren Wert erhöht. In Folge wird die Bremse 6 zu einem späteren Zeitpunkt $t_2$ durch ein stufenförmiges Steuersignal in einem Schritt gelöst/gelüftet. Auf diese Weise kann der steuerungstechnische Aufwand für das Anlaufen der Förderrolle 4 gering gehalten werden. Prinzipiell könnte sich das Motormoment $M_m$ in der Fig. 17 auch anders ändern, beispielsweise sukzessive. Das Lösen der Bremse 6 kann auch dann zeitverzögert zu $t_1$ erfolgen. Generell kann ein Zeitversatz beispielsweise auch vom Empfang eines Anlaufsignals, das von einer übergeordneten Steuerung 42 erhalten wird, gemessen werden.

Denkbar wäre auch, dass die Bremse 6 durch ein stufenförmiges Steuersignal in einem Schritt gelöst/gelüftet wird, wenn das vom Antriebsmotor 5 abgegebene Motormoment $M_m$ einen vorgebbaren Wert aufweist. Beispielsweise könnte dies in der Fig. 16 das Erreichen des konstanten Wertes des Motormoments $M_m$ kurz vor $t_4$ sein. Zu erwähnen ist auch, dass ein stufenförmiges Steuersignal für den Antriebsmotor 5 nicht zwangsläufig zu einer Stufe im Drehmomentverlauf $M_m$ führt. Viel eher wird sich das Motormoment $M_m$ in der Realität auch bei einem stufenförmigen Steuersignal sukzessive erhöhen.

Denkbar ist in einer Ausführungsvariante auch, dass über den beim Bremsen eines Stückguts vom Antriebsmotor 5 verursachten generatorischen Stroms ein Gewicht des Stückguts respektive das von ihm verursachte Lastmoment $M_m$ berechnet und in Folge für einen nachfolgenden Anfahrvorgang herangezogen wird. Dementsprechend kann das Lösen/Lüften der Bremse 6 bei leichten Stückgütern rascher erfolgen als bei schweren Stückgütern. In der Fig. 16 kann das Bremsmoment $M_b$ demzufolge rascher gesenkt werden als bei schweren Lasten, ohne dass eine unerwünschte Rückwärtsdrehung der Förderrolle 4 zu befürchten wäre. Analog kann die Zeitspanne zwischen $t_1$ und $t_2$ in der Fig. 17 bei leichten Stückgütern kürzer gewählt werden als bei schweren Stückgütern.

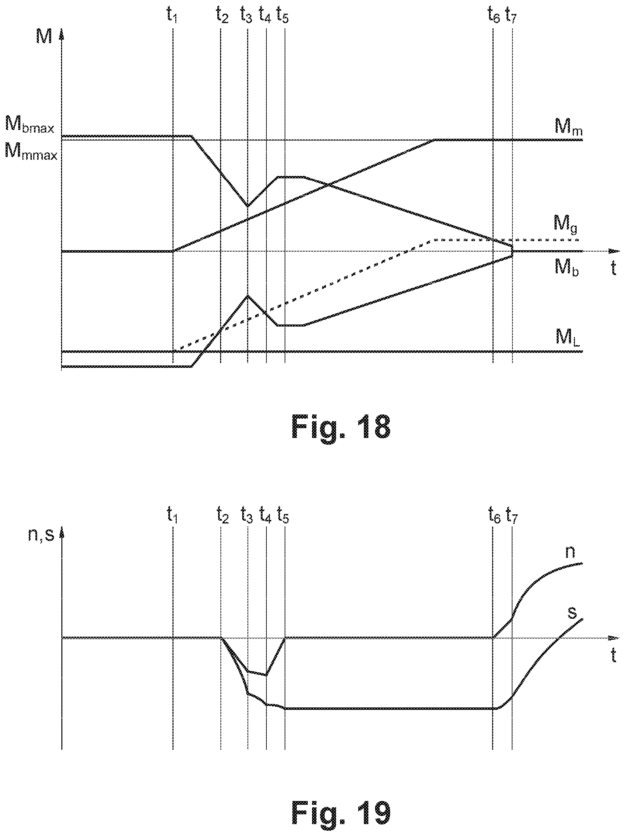

Die Figuren 18 und 19 zeigen nun ein weiteres Beispiel der beim Anlauf der Förderrolle 4 ablaufenden Vorgänge anhand weiterer zeitlicher Drehmomentverläufe (Fig. 18) und anhand eines Wegdiagramms beziehungsweise Drehzahldiagramms (Fig. 19).

Bei dieser Variante wird eine Drehung der Förderrolle 4 während des Anlaufvorgangs überwacht. Ein zeitlicher Gradient des Bremsmoments $M_b$ wird bei Drehungen, welche gleichsinnig zum vom Antriebsmotor abgegebenen Motormoment $M_m$ sind, gesenkt. Bei Drehungen, welche gegensinnig zum vom Antriebsmotor abgegebenen Motormoment $M_m$ sind, wird der Gradient des Bremsmoments $M_b$ erhöht und insbesondere auch umgekehrt.

In diesem Beispiel wird zu einem Zeitpunkt $t_1$ begonnen, das Motormoment $M_m$ linear auf einen konstanten Wert zu erhöhen. Etwas später wird das Bremsmoment $M_b$ mit einem relativ starkem Abfall (Gradienten) gesenkt. Da das Bremsmoment $M_b$ nicht richtungsabhängig ist und sowohl einer Vorwärtsdrehung der Förderrolle 4 als auch einer Rückwärtsdrehung entgegenwirkt, ist das Bremsmoment $M_b$ in der Fig. 18 auch gespiegelt um die t-Achse eingezeichnet. Aus dieser Spiegelung wird erkennbar, dass der Absolutwert des Gesamtmoments $M_g$ den Absolutwert des Bremsmoments $M_b$ zum Zeitpunkt $t_2$ übersteigt, und sich die Förderrolle 4 aufgrund des negativen Wertes des Gesamtmoments $M_g$ entgegen der gewollten Förderrichtung rückwärts zu drehen beginnt. In der Fig. 19 ist dies an den Verläufen für den Weg s und die Drehzahl n erkennbar. Diese (eigentlich ungewollte) Drehung der Förderrolle 4 wird von der zweiten elektronischen Steuerung 30 erkannt, und in Folge wird das Bremsmoment $M_b$ zu einem Zeitpunkt $t_3$ erhöht, konkret wird der Gradient des Bremsmoments $M_b$ hier sogar umgekehrt. Zu einem Zeitpunkt $t_4$ übersteigt der Absolutwert des Bremsmoments $M_b$ den Absolutwert des Gesamtmoments $M_g$, wodurch die Drehung der Förderrolle 4 abgebremst und zu einem Zeitpunkt $t_5$ schließlich gestoppt wird. Zu einem Zeitpunkt $t_6$ übersteigt das (positive) Gesamtmoment $M_g$ das Bremsmoment $M_b$, wodurch sich die Förderrolle 1 in Förderrichtung zu drehen beginnt. Zum Zeitpunkt $t_7$ wird der Gradient des Bremsmoments $M_b$ daher gesenkt und die Bremse 6 in einem Schritt vollständig gelöst/gelüftet. Wie aus der Fig. 18 erkennbar ist, ist der Absolutwert des zeitlichen Gradienten des Bremsmoments $M_b$ beim Lösen der Bremse 6 bis auf kurze Ausnahmen fallend.

Generell ist anzumerken, dass sich die vorliegende Erfindung insbesondere auf geneigte Förderderbahnen bezieht, das heißt in Förderrichtung ansteigende oder abfallende Abschnitte. Die Fördereinrichtung 1 umfasst ein erstes Rahmenprofil 2 und ein zweites Rahmenprofil 3 sowie eine zwischen diesen durch die Förderrollen 4, 8, 9 ausgebildete Rollenförderbahn, welche unter anderem einen ansteigenden oder abfallenden Abschnitt ausbilden kann. In diesen Abschnitten können insbesondere nur Förderrollen 4 oder nur Förderrollen 4 und 8 vorgesehen sein.

Insbesondere wird festgehalten, dass die Fördereinrichtung 1 in der Realität auch mehr oder weniger Bestandteile als dargestellt umfassen kann.

Der Ordnung halber sei abschließend darauf hingewiesen, dass zum besseren Verständnis des Aufbaus der Fördereinrichtung 1 dieses beziehungsweise deren Bestandteile teilweise unmaßstäblich und/oder vergrößert und/oder verkleinert dargestellt wurden.

**Bezugszeichenaufstellung**

| | |
|---|---|
| 1 | Fördereinrichtung |
| 2 | erstes Rahmenprofil |
| 3 | zweites Rahmenprofil |
| 4 | (motorisierte) Förderrolle |
| 5 | Antriebsmotor |
| 6 | Bremse |
| 7 | Riemen |
| 8 | (nicht motorisierte) Förderrolle |
| 9 | leerlaufende Rolle |
| 10 | erster Energieversorgungsbus |
| 11 | erste Anschlussbox |
| 12 | zweiter Energieversorgungsbus |
| 13 | zweite Anschlussbox |
| 14 | Lager |
| 15 | (Motor)Achse |
| 16 | (Motor)kabel |
| 17 | erste elektronische Steuerung |
| 18 | Rollenkörper |
| 19 | Rollenende |
| 20 | Lager |
| 21 | zweite Achse |
| 22 | Trägerbuchse |
| 23 | Stator |
| 24 | Spule |
| 25 | erste Reibscheibe |
| 26 | Feder |
| 27 | zweite Reibscheibe |
| 28 | Verzahnung |
| 29 | Kabel |
| 30 | zweite elektronische Steuerung |
| 31 | Lagerschild |
| 32 | Verbindungskabel |
| 33 | Stecker |
| 34 | Isolator |
| 35 | Stromleiter |
| 36 | Grundplatte |
| 37 | Aufsteckteil |
| 38 | Endkappe |
| 39 | Buchse für Datenbus |
| 40 | Kontakt |

41      Kontakt
42      übergeordnete Steuerung / Leitrechner

$\mu$C      Microcontroller
D      Freilaufdiode
$F_1, F_2$      Sicherung
GND      Masseanschluss
$R_1, R_2$      Spannungsteiler
T      Transistor
$U_1$      erste Spannung
$U_2$      zweite Spannung
VC      Spannungsregler

M      Drehmoment
$M_b$      Bremsmoment
$M_{bmax}$      maximales Bremsmoment
$M_g$      Gesamtmoment
$M_L$      Lastmoment
$M_m$      Motormoment
$M_{mmax}$      maximales Motormoment
n      Drehzahl
s      Weg
t      Zeit

**Patentansprüche**

1. Fördereinrichtung (1), umfassend

   - ein erstes Rahmenprofil (2) und ein davon beabstandet verlaufendes, zweites Rahmenprofil (3),
   - zumindest eine zwischen den Rahmenprofilen (2, 3) angeordnete Förderrolle (4) mit einem in der Förderrolle (4) angeordneten Antriebsmotor (5) und einer in der Förderrolle (4) angeordneten Bremse (6),
   - eine dem Antriebsmotor (5) zugeordnete erste elektronische Steuerung (17) und eine der Bremse (6) zugeordnete zweite elektronische Steuerung (30),

   **dadurch gekennzeichnet, dass**
   die erste elektronische Steuerung (17) oder die zweite elektronische Steuerung (30) oder eine dieser übergeordnete Steuerung (42) dazu ausgebildet ist, die Bremse (6) aufgrund eines Befehls zum Anfahren der Förderrolle (4) nach dem Anlegen einer elektrischen Spannung an den Antriebsmotor (5) erst zeitverzögert vollständig zu lösen beziehungsweise zu lüften.

2. Fördereinrichtung (1) nach Anspruch 1, **dadurch gekennzeichnet, dass**

   - der Antriebsmotor (5) näher am ersten Rahmenprofil (2) liegt als am zweiten Rahmenprofil (3),

   - die Fördereinrichtung (1) einen längs des ersten Rahmenprofils (2) verlaufenden, ersten Energieversorgungsbus (10) umfasst, welcher elektrisch mit dem Antriebsmotor (5) verbunden oder gekoppelt ist,
   - die Bremse (6) näher am zweiten Rahmenprofil (3) liegt als am ersten Rahmenprofil (2),
   - ein längs des zweiten Rahmenprofils (3) verlaufender, zweiter Energieversorgungsbus (12) vorgesehen ist, welcher elektrisch mit der Bremse (6) verbunden oder gekoppelt ist,
   - der Antriebsmotor (5) von der Bremse (6) innerhalb der Förderrolle (4) elektrisch getrennt ist und
   - eine dem Antriebsmotor (5) zugeordnete Verkabelung (16) ausschließlich auf der dem ersten Rahmenprofil (2) näher liegenden Seite der Förderrolle (4) und eine der Bremse (6) zugeordnete Verkabelung (29) ausschließlich auf der dem zweiten Rahmenprofil (3) näher liegenden Seite der Förderrolle (4) aus der Förderrolle (4) herausgeführt ist.

3. Fördereinrichtung (1) nach Anspruch 1 oder 2, **dadurch gekennzeichnet, dass** die erste elektronische Steuerung (17) von der zweiten elektronischen Steuerung (30) innerhalb der Förderrolle (4) elektrisch getrennt ist.

4. Fördereinrichtung (1) nach einem der Ansprüche 1 bis 3, **dadurch gekennzeichnet, dass** die erste elektronische Steuerung (17) auf dem ersten Rahmenprofil (2) angeordnet ist und/oder die zweite elektronische Steuerung (30) auf dem zweiten Rahmenprofil (3) angeordnet ist.

5. Fördereinrichtung (1) nach einem der Ansprüche 1 bis 4, **dadurch gekennzeichnet, dass** die erste elektronische Steuerung (17) im Inneren der Förderrolle (4) angeordnet ist, wobei die erste elektronische Steuerung (17) dem ersten Rahmenprofil (2) näher liegt als dem zweiten Rahmenprofil (3), und/oder die zweite elektronische Steuerung (30) im Inneren der Förderrolle (4) angeordnet ist, wobei die zweite elektronische Steuerung (30) dem zweiten Rahmenprofil (3) näher liegt als dem ersten Rahmenprofil (2).

6. Fördereinrichtung (1) nach einem der Ansprüche 1 bis 5, **dadurch gekennzeichnet, dass** die Bremse (6) als elektromagnetisch betätigte, selbsthaltende Reibbremse ausgebildet ist.

7. Fördereinrichtung (1) nach einem der Ansprüche 1 bis 6, **dadurch gekennzeichnet, dass** ein maximales Bremsmoment ($M_{bmax}$) der Bremse (6) größer ist als ein maximales Motormoment ($M_{mmax}$) des Antriebsmotors (5).

8. Fördereinrichtung (1) nach einem der Ansprüche 1 bis 7, **dadurch gekennzeichnet, dass** der erste Energieversorgungsbus (10) und/oder der zweite Energieversorgungsbus (12) einen längs des ersten Rahmenprofils (2) beziehungsweise längs des zweiten Rahmenprofils (3) verlaufenden Isolator (34) mit mehreren längsseitig offenen Aufnahmen und mehrere in dem Isolator (34) angeordnete Stromleiter (35) aufweist, wobei je ein Stromleiter (35) in je einer Aufnahme gelagert ist.

9. Fördereinrichtung (1) nach Anspruch 8, **dadurch gekennzeichnet, dass** der Formfaktor f eines Stromleiters (35), welcher als Quotient des Umfangs eines zum Querschnitt des Stromleiters (35) flächenäquivalenten Kreises und des Umfangs des genannten Querschnitts des Stromleiters (35) definiert ist, im Bereich von f= 0,88 bis zu f 1,00 liegt.

10. Fördereinrichtung (1) nach Anspruch 9, **dadurch gekennzeichnet, dass** der Querschnitt eines Stromleiters (35) polygonförmig ist.

11. Fördereinrichtung (1) nach Anspruch 9, **dadurch gekennzeichnet, dass** der Querschnitt eines Stromleiters (35) oval ist.

12. Fördereinrichtung (1) nach einem der Ansprüche 9 bis 11, **dadurch gekennzeichnet, dass** die elektrische Verbindung zum Antriebsmotor (5), zur Bremse (6), zur ersten elektronischen Steuerung (17) und/oder zur zweiten elektronischen Steuerung (30) mit Hilfe von federnden und punktförmig, linienförmig oder flächig auf den Stromleitern (35) aufliegenden Kontakten (41) erfolgt.

13. Fördereinrichtung (1) nach einem der Ansprüche 9 bis 12, **dadurch gekennzeichnet, dass** die elektrische Verbindung von mehreren Abschnitten von Stromleitern (35) mit Hilfe von federnden die Stromleiter (35) umgreifenden Kontakten (40) erfolgt.

14. Fördereinrichtung nach Anspruch 13, **dadurch gekennzeichnet, dass** die Kontakte (40) jeweils mehrere quer zum Stromleiter (35) verlaufende und in Längsrichtung desselben voneinander beabstandete Kontaktzungen aufweisen.

15. Fördereinrichtung (1) nach einem der Ansprüche 1 bis 14, **dadurch gekennzeichnet, dass** der erste und der zweite Energieversorgungsbus (10, 12) jeweils zumindest drei voneinander isolierte Stromleiter (35) aufweisen, wobei ein erster Stromleiter (35) mit einem Energieversorgungseingang des Antriebsmotors (5) beziehungsweise der Bremse (6) verbunden ist, ein zweiter Stromleiter (35) mit einem Energieversorgungseingang der ersten elektronischen Steuerung (17) beziehungsweise der zweiten elektronischen Steuerung (30) verbunden ist und zumindest ein dritter Stromleiter (35) mit einem Masseanschluss des Antriebsmotors (5), der Bremse (6) und der ersten und zweiten elektronischen Steuerung (17, 30) verbunden ist.

16. Fördereinrichtung (1) nach einem der Ansprüche 1 bis 15, **dadurch gekennzeichnet, dass** in einem zur Bremse (6) führenden Stromkreis ein Schaltelement (T) vorgesehen ist und die zweite elektronische Steuerung (30) dazu ausgebildet ist, den Schalter (T) zu öffnen, wenn ein Abfall einer ersten Spannung $(U_1)$ an einem Energieversorgungseingang der Bremse (6) unter einen ersten vorgebbaren Schwellwert festgestellt wird und/oder ein Abfall einer zweiten Spannung $(U_2)$ an einem Energieversorgungseingang der zweiten elektronischen Steuerung (30) unter einen zweiten vorgebbaren oder vorgegebenen Schwellwert festgestellt wird oder vorliegt.

17. Betriebsverfahren für eine Förderrolle (4) einer Fördereinrichtung (1) mit einem in der Förderrolle (4) angeordneten Antriebsmotor (5) und einer in der Förderrolle (4) angeordneten Bremse (6), bei dem von einer übergeordneten Steuerung (42) ein Befehl zum Anfahren der Förderrolle (4) empfangen wird, **dadurch gekennzeichnet, dass** aufgrund des genannten Befehls eine elektrische Spannung an den Antriebsmotor (5) angelegt und die Bremse (6) erst zeitverzögert vollständig gelöst beziehungsweise gelüftet wird.

18. Betriebsverfahren nach Anspruch 17, **dadurch gekennzeichnet, dass** das vom Antriebsmotor (5) abgegebene Motormoment $(M_m)$ sukzessive erhöht und das von der Bremse (6) aufgebrachte Bremsmoment $(M_b)$ sukzessive gesenkt wird.

19. Betriebsverfahren nach Anspruch 17, **dadurch gekennzeichnet, dass** eine Drehung der Förderrolle (4) während des Anlaufvorgangs überwacht wird und ein zeitlicher Gradient des Bremsmoments $(M_b)$ der Bremse (6) bei Drehungen, welche gleichsinnig zum vom Antriebsmotor (5) abgegebenen Motormoment $(M_m)$ sind, gesenkt wird und bei Drehungen, welche gegensinnig zum vom Antriebsmotor (5) abgegebenen Motormoment $(M_m)$ sind, erhöht wird.

20. Betriebsverfahren nach Anspruch 17, **dadurch gekennzeichnet, dass** die Bremse (6) durch ein stufenförmiges Steuersignal in einem Schritt gelöst/gelüftet wird.

21. Betriebsverfahren nach Anspruch 20, **dadurch gekennzeichnet, dass** die Bremse (6) durch ein stufenförmiges Steuersignal in einem Schritt gelöst/gelüftet wird, wenn das vom Antriebsmotor (5) abgegebene Motormoment $(M_m)$ einen vorgebbaren Wert

aufweist.

22. Betriebsverfahren nach Anspruch 21, **dadurch gekennzeichnet, dass** das vom Antriebsmotor (5) abgegebene Motormoment ($M_m$) durch ein stufenförmiges Steuersignal in einem Schritt auf den besagten vorgebbaren Wert erhöht wird.

**Claims**

1. A conveying device (1) comprising

    - a first frame profile (2) and a second frame profile (3) spaced apart from the first frame profile (2),
    - at least one conveying roller (4) arranged between the frame profiles (2, 3) with a drive motor (5) arranged in the conveying roller (4) and a brake (6) arranged in the conveying roller (4),
    - a first electronic control (17) assigned to the drive motor (5), and a second electronic control (30) assigned to the brake (6),

    **characterized in that**
    the first electronic control (17) or the second electronic control (30) or a control (42) superordinate thereto is configured to fully release or raise the brake on the basis of a command to start up the conveying roller (4) only after a time delay after the application of voltage to the drive motor (5).

2. The conveying device (1) according to claim 1, **characterized in that**

    - the drive motor (5) is closer to the first frame profile (2) than to the second frame profile (3),
    - the conveying device (1) comprises a first power supply bus (10) which runs along the first frame profile (2) and which is connected or coupled electrically to the drive motor (5),
    - the brake (6) is closer to the second frame profile (3) than to the first frame profile (2),
    - a second power supply bus (12) which runs along the second frame profile (3) and which is connected or coupled electrically to the brake (6) is provided,
    - the drive motor (5) is separated electrically from the brake (6) inside the conveying roller (4), and
    - a wiring (16) associated with the drive motor (5) is led out of the conveying roller (4) exclusively on the side of the conveying roller (4) closer to the first frame profile (2) and a wiring (29) associated with the brake (6) is led out of the conveying roller (4) exclusively on the side of the conveying roller (4) closer to the second frame profile (3).

3. The conveying device (1) according to claim 1 or 2, **characterized in that** the first electronic control (17) is separated electrically from the second electronic control (30) inside the conveying roller (4).

4. The conveying device (1) according to one of claims 1 to 3, **characterized in that** the first electronic control (17) is arranged on the first frame profile (2) and/or the second electronic control (30) is arranged on the second frame profile (3).

5. The conveying device (1) according to one of claims 1 to 4, **characterized in that** the first electronic control (17) is arranged on the inside of the conveying roller (4), and the first electronic control (17) is closer to the first frame profile (2) than to the second frame profile (3), and/or the second electronic control (30) is arranged on the inside of the conveying roller (4), wherein the second electronic control (30) is closer to the second frame profile (3) than to the first frame profile (2).

6. The conveying device (1) according to one of claims 1 to 5, **characterized in that** the brake (6) is configured as an electromagnetically operated, self-holding friction brake.

7. The conveying device (1) according to one of claims 1 to 6, **characterized in that** a maximum braking torque ($M_{bmax}$) of the brake (6) is greater than a maximum motor torque ($M_{mmax}$) of the drive motor (5).

8. The conveying device (1) according to one of claims 1 to 7, **characterized in that** the first power supply bus (10) and/or the second power supply bus (12) has an isolator (34) running along the first frame profile (2) or along the second frame profile (3) with a plurality of receptacles open on the longitudinal side and a plurality of electric conductors (35) arranged in the isolator (34), wherein one electric conductor (35) is mounted in each receptacle.

9. The conveying device (1) according to claim 8, **characterized in that** the form factor f of an electric conductor (35), which is defined as a quotient of the circumference of a circle with an equivalent area to the cross-section of the electric conductor (35) and the circumference of said cross-section of the electric conductor (35), is in the range of f=0.88 to f=1.00.

10. The conveying device (1) according to claim 9, **characterized in that** the cross-section of an electric conductor (35) is polygonal.

11. The conveying device (1) according to claim 9, **characterized in that** the cross-section of an electric conductor (35) is oval.

**12.** The conveying device (1) according to one of claims 9 to 11, **characterized in that** the electrical connection to the drive motor (5), to the brake (6), to the first electronic control (17) and/or to the second electronic control (30) is performed via spring-loaded contacts (41) lying punctiformly, linearly or flat on the electric conductors (35).

**13.** The conveying device (1) according to one of claims 9 to 12, **characterized in that** the electrical connection of multiple sections of electric conductors (35) is performed via spring-loaded contacts (40) extending around the electric conductors (35).

**14.** The conveying device according to claim 13, **characterized in that** the contacts (40) each comprise a plurality of contact tabs which are transverse to the electric conductor (35) and spaced apart from one another in a longitudinal direction of the electric conductor (35).

**15.** The conveying device (1) according to one of claims 1 to 14, **characterized in that** the first and the second power supply bus (10, 12) each has at least three electric conductors (35) which are isolated from one another, wherein a first electric conductor (35) is connected to a power supply input of the drive motor (5) and/or the brake (6), a second electric conductor (35) is connected to a power supply input of the first electronic control (17) and/or the second electronic control (30), and at least one third electric conductor (35) is connected to a ground connection of the drive motor (5), the brake (6) and the first and second electronic control (17, 30).

**16.** The conveying device (1) according to one of claims 1 to 15, **characterized in that** a switching element (T) is provided in a circuit leading to the brake (6), and the second electronic control (30) is configured to open the switching element (T) if a drop in a first voltage ($U_1$) below a first predefinable threshold is detected at a power supply input of the brake (6) and/or a drop in a second voltage ($U_2$) below a second predefinable or predefined threshold is detected or existent at a power supply input of the second electronic control (30).

**17.** An operating method for a conveying roller (4) of a conveying device (1) with a drive motor (5) arranged in the conveying roller (4) and a brake (6) arranged in the conveying roller (4), in which a command to start up the conveying roller (4) is received from a superordinate control (42), **characterized in that** based on said command, a voltage is applied to the drive motor (5) and the brake (6) is fully released or raised only after a delay in time.

**18.** The operating method according to claim 17, **characterized in that** the motor torque ($M_m$) output by the drive motor (5) is increased successively and a braking torque ($M_b$) applied by the brake (6) is lowered successively.

**19.** The operating method according to claim 17, **characterized in that** a rotation of the conveying roller (4) is monitored during the start-up process, and a time gradient of the braking torque ($M_b$) of the brake (6) is lowered with rotations which are in the same direction as a motor torque ($M_m$) output by the drive motor (5) and is increased with rotations which are in opposite direction to the motor torque ($M_m$) output by the drive motor (5).

**20.** The operating method according to claim 17, **characterized in that** the brake (6) is released/raised by a step-like control signal in one step.

**21.** The operating method according to claim 20, **characterized in that** the brake (6) is released/raised by a step-like control signal in one step, when the motor torque ($M_m$) output by the drive motor (5) has a predefinable value.

**22.** The operating method according to claim 21, **characterized in that** the motor torque ($M_m$) output by the drive motor (5) is increased by a step-like control signal in one step to said predefinable value.

**Revendications**

**1.** Dispositif de transport (1) comprenant

- un premier profilé de cadre (2) et un deuxième profilé de cadre (3) distant de celui-ci,
- au moins un rouleau de transport (4) disposé entre les profilés de cadre (2, 3), avec un moteur d'entraînement (5) disposé dans le rouleau de transport (4) et un frein (6) disposé dans le rouleau de transport (4),
- une première commande électronique (17) correspondant au moteur d'entraînement (5) et une deuxième commande électronique (30) correspondant au frein (6),
**caractérisé en ce que**
la première commande électronique (17) ou la deuxième commande électronique (30) ou une commande (42), hiérarchiquement supérieure à celle-ci, est conçue pour ne relâcher ou ne débloquer complètement le frein (6) sur la base d'une instruction de démarrage du rouleau de transport (4), que de manière différée, après l'application d'une tension électrique au moteur d'entraînement (5).

**2.** Dispositif de transport (1) selon la revendication 1, **caractérisé en ce que**

- le moteur d'entraînement (5) se trouve plus près du premier profilé de cadre (2) que du deuxième profilé de cadre (3),
- le dispositif de transport (1) comprend un premier bus d'alimentation (10) s'étendant le long du premier profilé de cadre (2), qui est relié ou couplé électriquement avec le moteur d'entraînement (5),
- le frein (6) se trouve plus près du deuxième profilé de cadre (3) que du premier profilé de cadre (2),
- un deuxième bus d'alimentation (12), s'étendant le long du deuxième profilé de cadre (3), est prévu, qui est relié ou couplé électriquement avec le frein (6),
- le moteur d'entraînement (5) est isolé électriquement du frein (6) à l'intérieur du rouleau de transport (4) et
- un câblage (16) correspondant au moteur d'entraînement (5) est guidé exclusivement sur le côté du rouleau de transport (4) se trouvant plus près du premier profilé de cadre (2) et un câblage (29) correspondant au frein (6) est guidé exclusivement sur le côté du rouleau de transport (4) se trouvant plus près du deuxième profilé de cadre (3), hors du rouleau de transport (4).

**3.** Dispositif de transport (1) selon la revendication 1 ou 2, **caractérisé en ce que** la première commande électronique (17) est isolée électriquement de la deuxième commande électronique (30) à l'intérieur du rouleau de transport (4).

**4.** Dispositif de transport (1) selon l'une des revendications 1 à 3, **caractérisé en ce que** la première commande électronique (17) est disposée sur le premier profilé de cadre (2) et/ou la deuxième commande électronique (30) est disposée sur le deuxième profilé de cadre (3).

**5.** Dispositif de transport (1) selon l'une des revendications 1 à 4, **caractérisé en ce que** la première commande électronique (17) est disposée à l'intérieur du rouleau de transport (4), dans lequel la première commande électronique (17) se trouve plus près du premier profilé de cadre (2) que du deuxième profilé de cadre (3) et/ou la deuxième commande (30) est disposée à l'intérieur du rouleau de transport (4), dans lequel la deuxième commande électronique (30) se trouve plus près du deuxième profilé de cadre (3) que du premier profilé de cadre (2).

**6.** Dispositif de transport (1) selon l'une des revendications 1 à 5, **caractérisé en ce que** le frein (6) est conçu comme un frein à friction auto-maintenu, actionné de manière électromagnétique.

**7.** Dispositif de transport (1) selon l'une des revendications 1 à 6, **caractérisé en ce qu'**un couple de freinage maximal ($M_{bmax}$) du frein (6) est supérieur à un couple de moteur maximal ($M_{mmax}$) du moteur d'entraînement (5).

**8.** Dispositif de transport (1) selon l'une des revendications 1 à 7, **caractérisé en ce que** le premier bus d'alimentation (10) et/ou le deuxième bus d'alimentation (12) comprend un isolateur (34) s'étendant le long du premier profilé de cadre (2) respectivement le long du deuxième profilé de cadre (3), avec plusieurs logements ouverts de manière longitudinale et plusieurs conducteurs électriques (35) disposés dans l'isolateur (34), dans lequel chaque conducteur électrique (35) est logé dans un logement.

**9.** Dispositif de transport (1) selon la revendication 8, **caractérisé en ce que** le facteur de forme f d'un conducteur électrique (35), qui est défini comme le rapport entre la circonférence d'un cercle de surface équivalente à al section transversale du conducteur électrique (35) et la circonférence de la section transversale mentionnée du conducteur électrique (35), est de l'ordre de f = 0,88 à f = 1,00.

**10.** Dispositif de transport (1) selon la revendication 9, **caractérisé en ce que** la section transversale d'un conducteur électrique (35) est de forme polygonale.

**11.** Dispositif de transport (1) selon la revendication 9, **caractérisé en ce que** la section transversale d'un conducteur électrique (35) est de forme ovale.

**12.** Dispositif de transport (1) selon l'une des revendications 9 à 11, **caractérisé en ce que** la liaison électrique avec le moteur d'entraînement (5), le frein (6), la première commande électronique (17) et/ou la deuxième commande électronique (30) est établie à l'aide de contacts (41) élastiques et ponctuels, de forme linéaire ou reposant sur toute leur surface sur les conducteurs électriques (35).

**13.** Dispositif de transport (1) selon l'une des revendications 9 à 12, **caractérisé en ce que** la liaison électrique de plusieurs portions de conducteurs électriques (35) est établie à l'aide de contacts (40) élastique entourant les conducteurs électriques (35).

**14.** Dispositif de transport (1) selon la revendication 13, **caractérisé en ce que** les contacts (40) comprennent chacun plusieurs languettes de contact s'étendant transversalement par rapport au conducteur électrique (35) et distants entre eux dans la direction longitudinale de celui-ci.

**15.** Dispositif de transport (1) selon l'une des revendications 1 à 14, **caractérisé en ce que** les premier et deuxième bus d'alimentation (10, 12) comprennent chacun au moins trois conducteurs électriques (35) isolés les uns des autres, dans lequel un premier conducteur électrique (35) est relié avec une entrée d'alimentation du moteur d'entraînement (5) respectivement du frein (6), un deuxième conducteur électrique (35) est relié avec une entrée d'alimentation de la première commande électronique (17) respectivement de la deuxième commande électronique (30) et au moins un troisième conducteur électrique (35) est relié avec un branchement à la masse du moteur d'entraînement (5), du frein (6) et des première et deuxième commandes électroniques (17, 30).

**16.** Dispositif de transport (1) selon l'une des revendications 1 à 15, **caractérisé en ce que**, dans un circuit électrique conduisant au frein (6), est prévu un élément de commutation (T) et la deuxième commande électronique (30) est conçue pour ouvrir l'élément de commutation (T) lorsqu'une chute d'une première tension ($U_1$) au niveau d'une entrée d'alimentation du frein (6) en dessous d'une première valeur seuil prédéterminée est constatée et/ou lorsqu'une chute d'une deuxième tension ($U_2$) au niveau d'une entrée d'alimentation de la deuxième commande électronique (30) en dessous d'une deuxième valeur seuil prédéterminée est constatée ou existe.

**17.** Procédé de fonctionnement pour un rouleau de transport (4) d'un dispositif de transport (1) avec un moteur d'entraînement (5) disposé dans le rouleau de transport (4) et un frein (6) disposé dans le rouleau de transport (4), dans lequel une commande prioritaire (42) reçoit une instruction pour le démarrage du rouleau de transport (4),
**caractérisé en ce que**
sur la base de l'instruction mentionnée, une tension électrique est appliquée au moteur d'entraînement (5) et le frein (6) n'est relâche ou débloqué complètement que de manière différée.

**18.** Procédé de fonctionnement selon la revendication 17, **caractérisé en ce que** le couple moteur ($M_m$) généré par le moteur d'entraînement (5) est augmenté progressivement et le couple de freinage ($M_b$) généré par le frein (6) est diminué progressivement.

**19.** Procédé de fonctionnement selon la revendication 17, **caractérisé en ce qu'**une rotation du rouleau de transport (4) pendant le processus de démarrage est surveillé et un gradient temporel du couple de freinage ($M_b$) du frein (6) est diminué dans le cas de rotations qui vont dans le même sens que le couple moteur ($M_m$) généré par le moteur d'entraînement (5) et est augmenté dans le cas de rotations qui vont dans le sens opposé au couple moteur ($M_m$) généré par le moteur d'entraînement (5).

**20.** Procédé de fonctionnement selon la revendication 17, **caractérisé en ce que** le frein (6) est relâché / débloqué en une étape par un signal de commande à paliers.

**21.** Procédé de fonctionnement selon la revendication 20, **caractérisé en ce que** le frein (6) est relâché / débloqué en une étape par un signal de commande à paliers lorsque le couple moteur ($M_m$) généré par le moteur d'entraînement (5) présente une valeur prédéterminée.

**22.** Procédé de fonctionnement selon la revendication 21, **caractérisé en ce que** le couple moteur ($M_m$) généré par le moteur d'entraînement (5) est augmenté en une étape par un signal de commande à paliers, jusqu'à la valeur prédéterminée mentionnée.

Fig. 1

Fig. 2

## Fig. 3

## Fig. 4

**Fig. 5**

**Fig. 6**

**Fig. 7**

**Fig. 8**

**Fig. 9**

**Fig. 10**

**Fig. 11**

11

36

37

10

41

34

35

**Fig. 12**

CC

11

41

C

11

C

**Fig. 13**

**Fig. 14**

**Fig. 15**

Fig. 16

Fig. 17

**Fig. 18**

**Fig. 19**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1848094 A2
- US 7021456 B2

- EP 1172312 A1